# EUROPEAN PATENT SPECIFICATION

(11) **EP 0 627 579 B1**
(45) Date of publication and mention of the grant of the patent: **05.03.1997**
(21) Application number: 94108553.2
(22) Date of filing: 03.06.1994
(51) Int. Cl.: F16H 61/02

(54) **Hydraulic controller for automatic transmissions**
Hydraulische Steuerung für Automatikgetriebe
Dispositif de commande hydraulique pour transmissions automatiques

(30) Priority: 04.06.1993 JP 160350/93; 31.01.1994 JP 29010/94
(43) Date of publication of application: 07.12.1994
(73) Proprietor: NIPPONDENSO CO., LTD., Kariya-shi, Aichi-ken 448 (JP)
(72) Inventor: Takagi, Akira, Obu-shi, Aichi-ken (JP); Murakami, Fumiaki, Okazaki-shi, Aichi-ken (JP); Fujitsuna, Masami, Kariya-shi, Aichi-ken (JP); Suzuki, Masaru, Kariya-shi, Aichi-ken (JP); Natsume, Kazuyuki, Toyohashi-city, Aichi-pref. (JP); Takei, Toshihiro, Okazaki-city, Aichi-pref. (JP)
(74) Representative: KUHNEN, WACKER & PARTNER

(56) References cited:
- EP-A- 0 510 657
- DE-A- 4 117 734
- FR-A- 2 677 098
- GB-A- 2 174 158
- PATENT ABSTRACTS OF JAPAN vol. 9, no. 98 (M-375) (1821) 27 April 1985 & JP-A-59 222 626 (KUBOTA TEKKO K.K.)

## Description

### BACKGROUND OF THE INVENTION

### 1.Field of the Invention

The present invention generally relates to a hydraulic controller for automatic transmissions that hydraulically controls the speed change mechanism of automatic transmissions. More particularly, the present invention relates to a hydraulic controller for automatic transmissions for vehicles.

### 2.Description of Related Art

Conventionally, an automatic transmission (AT) widely used for vehicles to smoothly transmit torque according to loads has achieved speed change control by means of a hydraulic circuit mounted with a plurality of dispersed hydraulic control valves, accumulators and solenoid valves. Therefore, the conventional AT is large in size and number of parts and components, complicated in structure and high in cost. In order to solve these problems of being large and complicated, an idea has been proposed, as disclosed in the Japanese Examined Patent Publication (Koukoku) No. 4-77183, that speed change is controlled by one integrated control valve. This idea can downsize, lighten and simplify the hydraulic controller for the conventional AT.

If the oil pressure is to be directly varied to control the oil pressure of each friction engaging element, as many hydraulic control valves as the number of the friction engaging elements within the AT are required, and so much so that the hydraulic controller becomes larger and less economical. For this reason, the integrated valve is used for hydraulic control. In order to achieve the proper oil pressure distribution according to the engagement state of the required friction engaging elements, automatic speed change is achieved by smoothly switching the oil pressure with minimum number of the hydraulic control valves as possible by using the hydraulic valves of the integrated valve and by further switching the hydraulic valves with a hydraulic control means.

In a system in which dispersed hydraulic control valves control each friction engaging element for speed change control, speed change control is achieved by specifying the speed change instruction (which selects friction engaging elements within an AT to obtain the proper gear ratio) by an operation of a selector lever (which a driver can select the desirable gear position freely to some extent) and an engine control computer (electronic control unit, ECU) based on an opening of an engine throttle and vehicle speed. In this case, it is taken into consideration that, even if the automatic control function of the ECU should be failed, due to an ECU fail-safe system and others, a driver can select forward or reverse gears and forward speed gear change to some degree by operating the selector lever. However, in the above conventional system which controls the automatic speed change by means of the integrated valve, as the valve switching is controlled only by the electric means, there is a problem that, in the event of a fail in the ECU itself or error such as wiring disconnection, the speed change function may be completely lost.

### SUMMARY OF THE INVENTION

An object of the present invention is to provide a simple, compact and controllable hydraulic controller for ATs.

Another object of the present invention is to provide a hydraulic controller for ATs having an integrated valve highly safe by achieving a manual control when a fail to control ECU of an automatic transmission.

In order to solve the above problem, the present invention is, in a hydraulic controller for an AT which controls the engagement and disengagement of a plurality of friction engaging elements provided within the AT by switching a plurality of speed change positions by switching the oil passages to be communicated with the friction engaging elements, to employ a technical means comprising an integrated valve which integrates a plurality of hydraulic valves for switching the oil passages to be communicated with the respective friction engaging elements, a valve switching means which can switch the plurality of hydraulic valves directly and simultaneously, an automatic hydraulic valve switching means for automatically driving and controlling the valve switching means, and a manual hydraulic valve switching means for manually driving and controlling the valve switching means.

### MODE OF OPERATION

The AT automatically switches and controls a plurality of hydraulic valves by using the automatic hydraulic valve switching means and furthermore manually switches and controls the same by using the manual hydraulic valve switching means. As both the automatic hydraulic valve switching means and the manual hydraulic valve switching means can switch the plurality of hydraulic valves directly and simultaneously, each friction engaging element is engaged and disengaged through each oil passages switched by the plurality of hydraulic valves, whereby a plurality of speed change positions in the AT can be switched and controlled.

### EFFECT OF THE INVENTION

As the integrated valve is equipped with dual control means (automatic and manual hydraulic valves switching means), the present invention can downsize the hydraulic controller for ATs by using the integrated valve, while maintaining the same control system as that employed by a vehicle equipped with a conventional complicated AT which does not use the integrated valve. Furthermore, the present invention can improve the hydraulic controller for ATs highly safe by achieving a manual control which can cope with a fail in the automatic mode (fail-safe means). Moreover, when a cam shaft is employed, as the hydraulic valves can be disposed symmetrically around and with respect to the cam shaft, the integrated valve can take various shapes in cross section, such as an almost flat plate and an almost V shape, and the hydraulic controller according to the present invention can be large in the degree of feedom in designing according to the AT to which the hydraulic controller is applied. In addition, when the hydraulic valves are driven by cam motion through pins, the driving force applied to the pins can be reduced by taking the disposition of the oil pressure communicating passages to be switched into consideration, whereby a driving force source for driving cams can be downsized and consequently the entirety of the hydraulic controller can also be downsized.

From the generic FR-A-2677098 a hydraulic controller for automatic transmissions has become known, which can switch and control the engagement and disengagement of a plurality of friction engaging elements provided within an automatic transmission by switching a plurality of speed change possitions while switching the oil passages to be communicated with said friction engaging elements. The hydraulic controller comprises an integrated valve for switching the oil passages to be communicated with the respective friction engaging elements, said integrated valve having a plurality of hydraulic valves and a valve switching means for controlling said plurality of hydraulic valves directly and simultaneously. To this end, in a cylindrical housing with a pluraltiy of connecting ports to the different friction engaging elements a rotatable sleeve is mounted which has a respective number of control openings and which is driven by a manually operated rack. Within said sleeve a cylindrical control member is rotatably guided. This control member can be driven by a motor belonging to an automatic hydraulic valve switching means provided for changing automatically the gears of the automatic transmission. In an end plate of the sleeve a circumferentially extending groove is provided into which a pin fixed to the central control member projects. By this construction, the angular movement of the motor for automatic gear change is limited depending on the position of the sleeve, i.e. of the rack position and thus the actual shifted gear range. As a matter of consequence, the arrangement in this known case is such that with the position of the gear control lever there is automatically provided a limitation for the movement of the automatic hydraulic valve switching means. Since the manual shift of the rack as well as the drive of the motor for automatically switching the hydraulic valves leads to a rotary movement of the valve elements, these both rotatable movements are not independent from each other.

### BRIEF DESCRIPTION OF THE DRAWINGS

FIG. 1 is a front sectional view illustrating an integrated valve of the first embodiment according to the present invention;
FIG. 2 is a system diagram illustrating the entirety of an AT;
FIG. 3 is a composition block diagram of an ECU for AT illustrating the input/output of signals thereto/therefrom;
FIG.4 is a communicating operation mode table illustrating the operation state of the integrated valve;
FIG. 5 is an operation state table of multiple disc clutches and multiple disc brakes of a transmission;
FIG. 6A is a side sectional view illustrating the integrated valve of FIG. 1;
FIG. 6B is a side sectional view illustrating the cam shaft of FIG. 1;
FIGS. 7A and 7B are flow charts of motor control forming a judgment in the event of fail;
FIG. 8A is a schematic illustrative view illustrating a cam shaft with a fail-safe mode position;
FIGS. 8B and 8C are operation views illustrating the operation of a spool valve;
FIG. 9A is a schematic illustrative view illustrating the cam shaft of FIG. 8A with a fail-safe mode position;
FIGS. 9B and 9C are operation views illustrating the operation of another spool valve other than FIGS. 8A to 8C;
FIGS. 10A and 10B are illustrative views of another spool valves other than the spool valves of FIGS. 8A to 8C and 9A to 9C;
FIG. 11A is an illustrative view of the spool valve taken along III-III in FIG. 1;
FIG. 11B is an illustrative view of differential driving force according to the disposition of pressure oil supply communicating passages;
FIG. 12 is a side sectional view illustrating a side sectional view of an integrated valve of almost V shape as a modification of FIG. 6A as the second embodiment;
FIG. 13 is a structural sectional view illustrating an integrated valve of the fourth embodiment;
FIGS. 14A and 14B are cross-sectional views of different valve plates of FIG. 13 taken along I-I and II-II respectively;
FIG. 15A is a side view of the slide valve of FIG. 13; and
FIG. 15B is a cross-sectional view of the slide valve of FIG. 13.

### DETAILED DESCRIPTION OF THE EMBODIMENTS

The present invention will now be described with reference to preferred embodiments as follows:

### (First Embodiment)

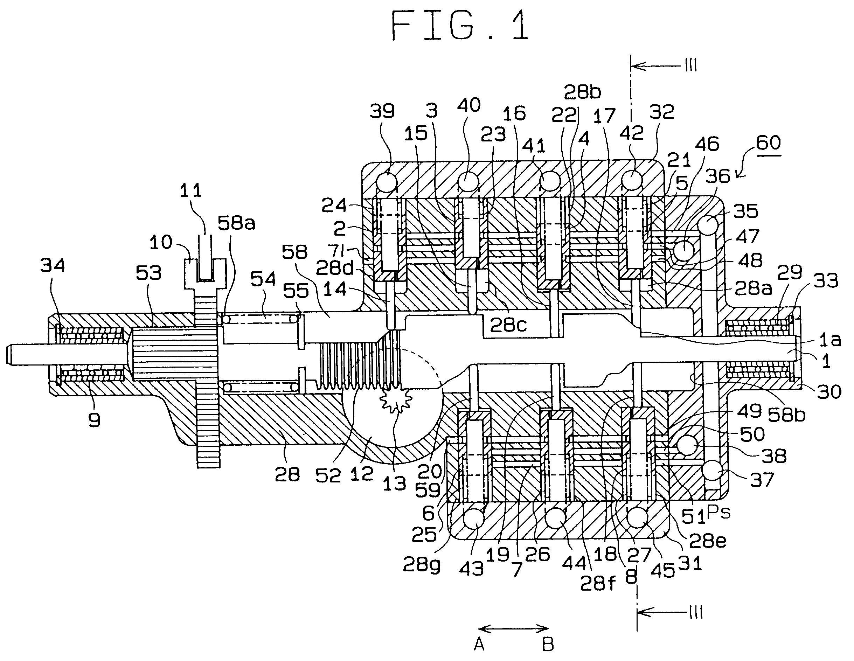

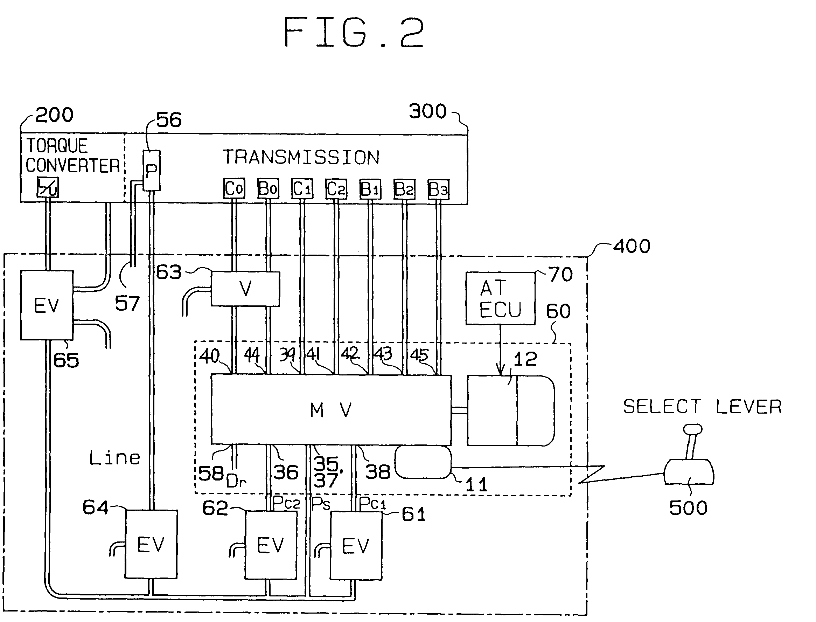

FIG. 1 is a cross-sectional view illustrating an integrated valve 60 composing a hydraulic controller of the first embodiment, in which the present invention is applied to an AT for a vehicle. As illustrated in FIG. 2 and as well known to the public, in the operation of the AT for the vehicle, the connection of gears within a transmission 300 is automatically or manually switched to transmit the torque of an engine (not illustrated, connected to the end of a torque converter 200) to rear or front wheels of the vehicle. FIG. 1 well illustrates the typical features of the present invention, while the construction of the overall hydraulic controller is well represented by a hydraulic controller 400 illustrated in FIG. 2. The integrated valve 60 and peripheral units thereof are disposed within an oil pan (not illustrated) located at the lower part of the transmission 300 within the AT, and the hydraulic controller 400 within the oil pan is in the drain from a hydraulic circuit.

Within the transmission 300 is installed a generally known hydraulic pump 56 directly connected to the spindle of the engine and rotationally driven thereby. The hydraulic pump 56 sucks through a suction port 57. The driving oil drained from each hydraulic unit into the oil pan or other devices on one hand, and supplies the pressure oil to each hydraulic unit through a line pressure control valve 64. The pressure oil supplied from the hydraulic pump 56 is pressure varying high pressure pump oil, and therefore be controlled to a constant high line pressure by the line pressure control valve 64, which is an electromagnetically controlled pressure control valve ("EV" in FIG. 2 means "electromagnetic valve"), and then supplied to each hydraulic unit. The hydraulic controller 400 includes two engaging oil pressure control valves 61 and 62 (collectively called "oil pressure control valve") to freely control the line pressure supplied from the line pressure control valve 64 to the proper engaging oil pressure suitable to the oil pressure for each friction engagement element (described later) in engagement within the transmission 300, and then supply the controlled pressure to the integrated valve 60. The engaging oil pressure control valves 61 and 62 are connected to pressure control ports 36 and 38 respectively (FIG. 1)
of the integrated valve 60. The line pressure control valve 64 is connected to line pressure ports 35 and 37 to directly supply the line pressure to the integrated valve 60, where the line pressure ports 35 and 37 are communicated with each other within a side housing 30.

The line pressure and engaging oil pressure supplied to the integrated valve 60 are transmitted from communicating ports 39 to 45 inclusive through each corresponding spool valves 2 to 8 inclusive to friction engaging elements (multiple disc clutches C₀ to C₂ inclusive and multiple disc brakes B₀ to B₃ inclusive, not illustrated) within the transmission 300. Each friction engaging element is connected to the gears within the transmission 300, which gears compose each transmission gear ratio of planetary gears and other gears. By disengaging these friction engaging elements, the speed change gear ratio is switched for speed change control for the vehicle.

A connecting part 11 is mechanically connected to a selector lever 500 which is used for controlling the driving condition of the vehicle, such as forward, reverse, neutral and parking by a driver. The line pressure is further connected to the torque converter 200 through a lockup (L/U) oil pressure control valve 65 to perform the L/U slip control of the torque converter 200.

The integrated valve 60 illustrated in FIG. 1 comprises a housing 28, the side housing 30 and port cases 31 and 32. Within a hollow part 58 arranged almost in the center of the housing 28 is mounted an almost cylindrical cam shaft 1. The cam shaft 1 holds bearing parts at the both ends, which are rotatably and fittingly inserted through bearings 9 and 29 which are ball bearings or roller bearings. The outer periphery of the cam shaft 1 includes convex and concave parts intended for serving as cams to shiftably drive the spool valves 2 to 8 inclusive. Furthermore, the cam shaft 1 holds a rack 52 on a part of the outer periphery thereof in the axial direction, which is engaged with a pinion 13 mounted on the spindle of a stepping motor 12. In this arrangement, the cam shaft 1 is shiftably driven in the axial direction (as indicated by an arrow A or B in FIG. 1) by the rotatably driving by the stepping motor 12. Gear grooves are extendedly formed on the outer periphery of the cam shaft 1 so that the engagement of the rack 52 on the cam shaft 1 with the pinion 13 can not be disengaged even if the cam shaft 1 rotates in the self-centered peripheral direction.

The bearings 9 and 29 support the cam shaft 1 in such a way that the cam shaft 1 can freely rotate and freely and axially shift. A distal end of the cam shaft 1 is formed a pinion 53 on the outer periphery. The pinion 53 is engaged with a rack 10. The rack 10 is mechanically connected to the connecting part 11 which is interlocked with the selector lever 500 located outside and operated by a driver.

The bearing 9 is mounted on a distal end of the housing 28 with a circlip 34, while the bearing 29 is mounted on the side housing 30 with a circlip 33. Into the outer periphery of the cam shaft 1 is fittingly set a return spring 54. The return spring 54 contacts the left end surface 58a of the hollow part 58 within the housing 28 at one end, and contacts a spring stopper 55 fixed on the cam shaft 1 on the other end. The return spring 54 energizes the cam shaft 1 in the direction as indicated by an arrow B in FIG. 1 so that an end 1a of the cam shaft 1 can contact an end surface 58b of the hollow part 58.

The spool valves 2 to 8 inclusive for switching oil passages are provided within the housing 28, arranged in a row at both sides of the cylindrical cam shaft 1, each vertically standing with respect to the cam shaft 1. The spool valves 2 to 8 inclusive are slidably inserted into cylindrical holes 28a to 29h inclusive respectively, the cylindrical holes 28a to 29h inclusive being provided within the housing 28 in the axial direction.

The structure of these spool valves 2 to 8 inclusive will now be detailed.

As illustrated in FIG. 11A, each of the spool valve 2 to 8 inclusive is cylindrical with a groove formed in the central part of the outer periphery thereof (e.g., a groove 5a of the spool valve 5 illustrated in FIG. 11A) and a hole part (e.g., a hole part 5b of the spool valve 5 illustrated in FIG. 11A). The hole part is communicated with an internal cylindrical part (e.g., an internal cylindrical part 5c of the spool valve 5 illustrated in FIG. 11A) provided within the groove, and so arranged to be communicated with ports 46 to 51 inclusive which are further communicated with cylindrical holes 28a to 28h inclusive. Each of the internal cylindrical parts 2c to 8c inclusive provided within the corresponding one of the spool valve 2 to 8 inclusive is open at one end to be communicated with the corresponding one of the communicate ports 39 to 45 inclusive provided within the port case 31 or 32.

Between the cylindrical cam shaft 1 and the unopened bottom part (e.g., an end surface 5d of the spool valve 5 in FIG. 11A) of each of the spool valves 2 to 8 inclusive is slidably and fittingly inserted the corresponding one (e.g., a pin 17) of pins 14 to 20 inclusive into the housing 28 in the vertical direction with respect to the axis of the cylindrical cam shaft 1 to transmit the cam motion of the cam shaft 1 to each (e.g., a spool valve 5) of the spool valves 2 to 8 inclusive. As the spool valves 2 to 8 inclusive slide within the corresponding cylindrical holes 28a to 28h inclusive, a pressure relief hole is provided at the closed bottom part of each of the spool valve 2 to 8 inclusive, to which each of the pins 14 to 20 inclusive contacts, to ensure smooth sliding of the spool valves 2 to 8 inclusive. The pressure relief hole in each of the spool valves 2 to 8 inclusive is designed to balance the oil pressure within each of the spool valves 2 to 8 inclusive and the oil pressure working against the surface of the closed bottom part of each of the spool valves 2 to 8 inclusive by supplying the internal oil thereof also to the unopened bottom part thereof. The spool valves 2 to 8 inclusive are pressed against the side of the cylindrical cam shaft 1 together with the pins 14 to 20 inclusive by springs 21 to 27 inclusive, and sealed within the cylindrical holes of the housing 28 by the port cases 31 and 32 fixed to the housing 28 with bolts (not illustrated) so as not to allow the spool valves 2 to 8 inclusive to spring out of the housing 28.

The side housing 30 includes the line pressure ports 35 and 37 to receive the line pressure (high pressure oil) from the line pressure control valve 64. The line pressure is transmitted from the line pressure ports 35 and 37 to the line pressure passages 46 and 51 respectively, which constitute oil pressure communicate passages. The line pressure communicating passage 46 is so provided that line pressure can be supplied to the cylindrical holes 28d, 28c, 28b and 28a into which the spool valves 2, 3, 4 and 5 are inserted respectively and correspondingly. On the other hand, the line pressure passage 51 is so provided that the line pressure can be supplied to the cylindrical holes 28g, 28f and 28e into which the spool valves 6, 7 and 8 are inserted respectively and correspondingly.

When each of the spool valves 2 to 8 inclusive is shiftably driven within the corresponding one of the cylindrical holes 28a to 28g inclusive by the cam shaft 1, and when the groove and hole of each of the spool valve 2 to 8 inclusive have been positioned in facing to the opening position of each of the cylindrical holes 28d, 28c, 28b and 28a of the line pressure passage 46 or to the opening position of each of the cylindrical holes 28g, 28f and 28e of the line pressure passage 51, the line pressure supplied to each of the line pressure passages 46 and 51, Pₛ, is supplied to the cylindrical part within each of the spool valves 2 to 8 inclusive through the groove and hole of each of the spool valves 2 to 8, and further supplied to the friction engaging elements through the respective communicating ports 39 to 42 inclusive of the port case 32 and the respective communicating ports 43 to 45 inclusive of the port case 31. Within the side housing 30 are provided the pressure control ports 36 and 38 to which the regulated engaging oil pressure (or control pressure) is supplied. From the pressure control ports 36 and 38 are extended the control pressure communicating passages 47 and 50 respectively provided in parallel with the line pressure passages 46 and 51 respectively through which the regulated engaging oil pressure (or control pressure) is supplied to each of the spool valves in the same way as the line pressure is 2 to 8 inclusive, and further supplied therefrom to each friction engaging element. As, however, the pressure control ports 36 and 38 are not communicated with each other within the side housing 30, the engaging oil pressure supplied from the engaging oil pressure control valve 62 to the pressure control port 36 is supplied only to the spool valves 2 to 5 inclusive which are communicated with the control pressure communicating passage 47. In the same manner, the engaging oil pressure supplied from the engaging oil pressure control valve 61 to the pressure control port 38 is supplied only to the spool valves 6 to 8 inclusive which are communicated with the control pressure communicating passage 50.

As a result, the engaging oil pressure supplied from the engaging oil pressure control valve 61 is supplied only to the multiple disc brakes B₁, B₀ and B₂, and the engaging oil pressure supplied from the engaging oil pressure control valve 62 is supplied only to the multiple disc clutches C₀, C₂ and C₁.

In addition, there are oil pressure communicating passage communicated with drains at the outside of the housing 28, i.e., drain pressure communicating passages 48 and 49 (also called "drain pressure ports" or simply "drains"), provided in parallel with the control pressure communicating passages 47 and 50 within the housing 28. When the grooves of the spool valves 2 to 8 inclusive are positioned to the positions communicated with these drain pressure communicating passages 48 and 49, the pressure oil within the friction engaging elements communicated with the spool valves 2 to 8 inclusive is drained from drain ports 59 and 71. As illustrated in FIG. 1, these the respective three drain pressure communicating passages 46 to 48 inclusive and 49 to 51 inclusive are so arranged that the nearest to the cam shaft 1 are the drain pressure communicate passage 48 and 49, the next nearest to the cam shaft 1 are the control pressure communicating passage 47 and 50, and the outermost from the cam shaft 1 are the line pressure communicating passage 46 and 51.

Of all the communicating ports 39 to 45 inclusive connected to the transmission 300, if both the ports 40 and 44 communicated with the multiple disc clutch C₀ and multiple disc brake B₀ respectively, which are installed within the transmission 300, simultaneously are operated, transmission 300 would be dysfunctioned and may be damaged due to the internal structure. To prevent these ports 40 and 44 from simultaneously being engaged, a dual engagement preventing valve 63 is set in both the ports 40 and 44 (FIG. 2). The other communicating ports 39, 41, 42, 43 and 45 are communicated with the other multiple disc clutches C₁ and C₂ and the multiple disc brakes B₁, B₂ and B₃ respectively. The multiple disc clutches C₀ to C₂ inclusive and the multiple disc brakes B₀ to B₃ inclusive are engaged and disengaged by the oil pressure supplied from the communicating ports 39 to 45 inclusive to switch the connection of a plurality of speed change modes within the transmission 300 for transmission control as an AT. Incidentally, the multiple disc brakes B₀ to B₃ inclusive are friction elements substantially the same as the multiple disc clutches C₀ to C₂ inclusive; the multiple disc brake is the same friction element as the multiple disc clutch, and has the structure that one side of the multiple disc clutch is fixed to the body of the transmission 300.

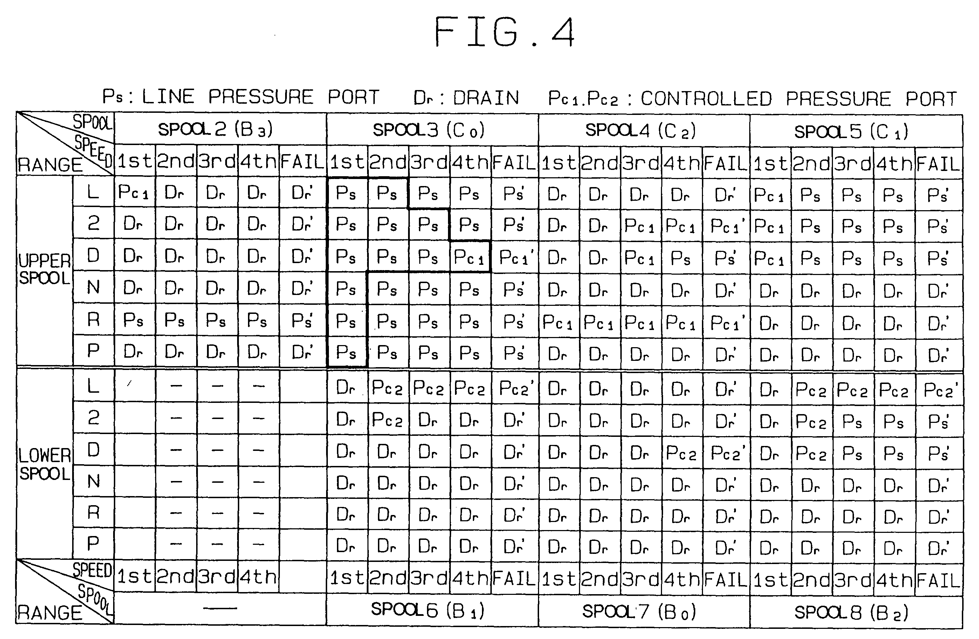

The cylindrical cam shaft 1 illustrated in FIG. 1 is controlled by the command sent from an electronic control unit (ECU) for AT, 70. When the cam shaft 1 is shifting and axially driven by the stepping motor 12, the positions of the spool valves 2 to 8 inclusive are controlled by means of the convex and concave parts formed on the outer periphery of the cam shaft 1 through the pins 14 to 20 inclusive. Accordingly, the grooves provided on the spool valves 2 to 8 inclusive are communicated with each of the communicating passage 46 to 51 inclusive, and the required oil pressure is transmitted to each of the communicating ports 30 to 45 inclusive. FIG. 4 is a table illustrating the combination of the connection of each of the spool valves 2 to 8 inclusive with the line pressure port Pₛ, drain Dᵣ, control pressure port P_{c1} communicated with the line pressure control valve 61, and control pressure port P_{c2} communicated with the line pressure valve 62 according to the range and speed change range of the selector lever 500.

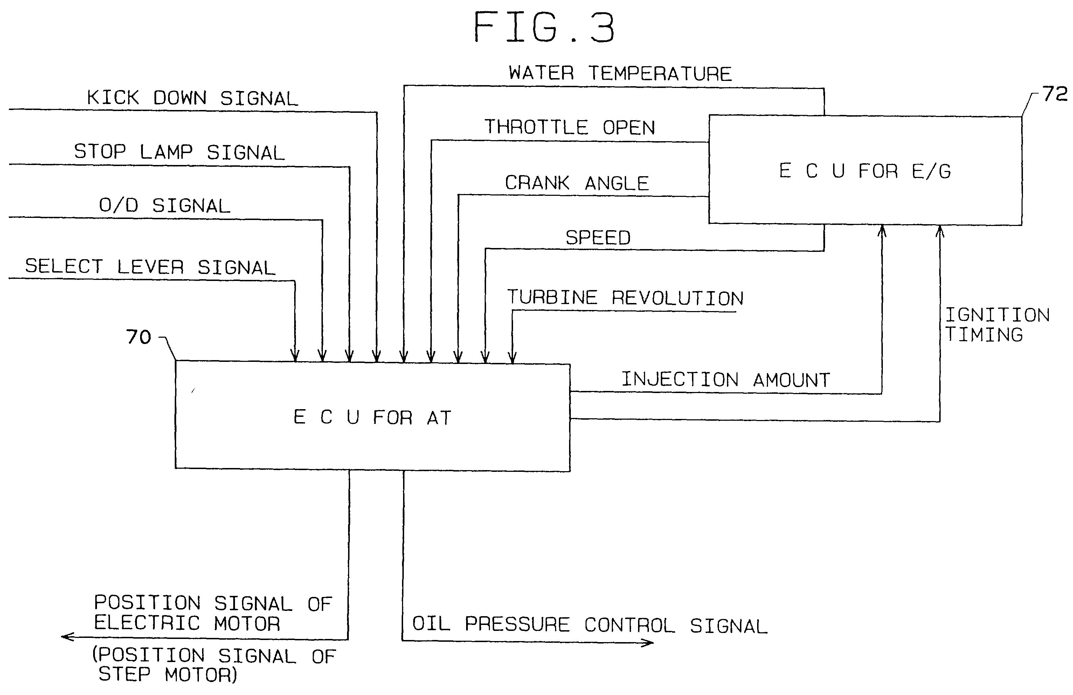

As illustrated in FIG. 3, the ECU for AT, 70, receives a kickdown signal for shifting the spool stage to the lower stage for acceleration, a selector lever signal indicating the position of the selector lever 500. The ECU for AT. 70, also receives signals from an electronic control unit (ECU) for engine, 72, and outputs a motor position signal for driving the stepping motor 12 while exchanging data with the ECU for engine, 72. The ECU for AT. 70, also outputs each pressure control signal to the pressure control valves 61, 62, 64 and 65. Among the data to be exchanged between the ECU for engine, 72, and the ECU for AT, 70, are, as illustrated in FIG. 3, radiator water temperature, throttle opening, crank shaft crank angle, vehicle speed and turbine rpm.

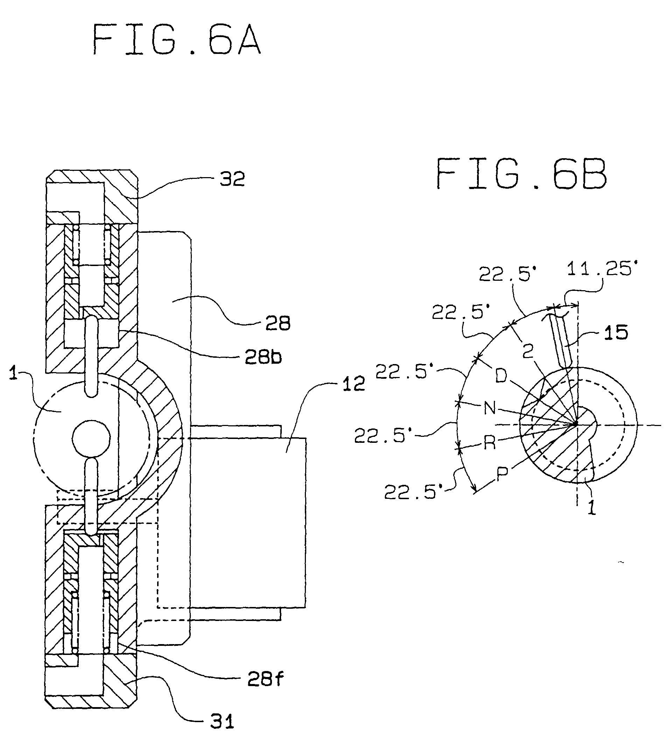

As the cylindrical cam shaft 1 is connected to the selector lever 500 through the connecting part 11, when the position of the selector lever 500 is manually selected by the driver, the cylindrical cam shaft 1 is rotated around the axis thereof by the rack 10 which is connected to the connecting part 11. By the rotation of the cylindrical cam shaft 1, the pins 14 to 20 inclusive contacting the cam shaft 1 are shiftably driven according to the convex and concave parts of the outer peripheral of the cam shaft 1 (FIG. 6B), whereby the respective spool valves 2 to 8 inclusive are controlled.

FIG. 6B, for example, illustrates a cross-sectional view of the cam shaft 1 axially cut across with the spool valve 3 in the 4th speed position and the selector lever 500 in the L (forward, low gear) position. The pin 15 in contact with the spool valve 3 is contacting the cam shaft 1 at the maximum diameter position thereof. In this position, the spool valve 3 is thrust upwards to the maximum extent, and, as a result, the spool valve 3 is in a position where the spool valve 3 is communicated with the line pressure port Pₛ, and the line pressure is supplied to the multiple disc clutch C₀ which is communicated with the spool valve 3.

When the selector lever 500 is shifted to 2 (forward, 2nd speed), D (forward, automatic speed change), N (neutral), R (reverse) and P (parking) in this order, the cam shaft 1 is rotated by 22.5° per shift through the connecting part 11, which is connected to the selector lever 500, and the rack 10. By this rotation of the cam shaft 1, the tip of the pin 15 slides in the rotational direction along the convex and concave parts on the outer periphery of the cam shaft 1. In FIG. 6B, the pin 15 shifts to the axial center only in the D range when the spool valve 3 is shifted to a position where the spool valve 3 is communicated with the control pressure communicating passage 47 and the engaging oil pressure is supplied to the clutch C₀.

In the other ranges, as is in the L range, the spool valve 3 is shifted to a position where the spool valve 3 is communicated with the line pressure port Pₛ. This state is illustrated in FIG.4 by the port state in each range of the spool valve 3 in the 4th speed position.

The spool valves other than spool valve 3 are also arranged for the same movement.

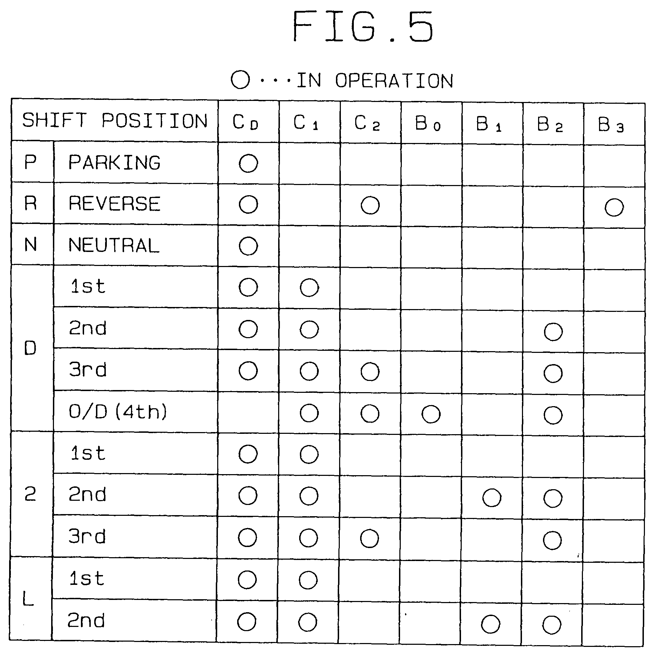

As the cylindrical cam shaft 1 is also controlled by the ECU for AT, 70, the signal from the selector lever 500 is inputted into the ECU for AT, 70. For this reason, the cylindrical cam shaft 1 includes convex and concave parts in both the directions of axis and periphery on the shaft side surface, and the shapes of the convex and concave parts are designed to achieve the positions of the spool valves 2 to 8 inclusive determined by the oil pressure communicating mode illustrated in FIG. 4. The operation states of the respective multiple disc clutches C₀ to C₂ inclusive and multiple disc brakes B₀ to B₃ for AT controlled as described in the above are as illustrated in FIG. 5.

Although the selector lever 500 is manually driven in the peripheral direction in the first embodiment, it goes without saying that the same effect can be obtained by adopting such an arrangement that the selector lever 500 is automatically driven in the axial direction by means of the stepping motor 12.

The convex and concave parts of the cylindrical cam shaft 1 illustrated in FIG. 1 may be provided not only by directly forming on the surface thereof but also by fitting a cam ring with the outer periphery formed accordingly over the cam shaft 1. In the latter case, it is easier to comply with the change in the number of the ports or the change in the combination of the ports. For example, in FIG. 1, when the housing 28 is divided into blocks around the respective cylindrical holes in which the respective spool valves 2 to 8 inclusive are housed, and these blocks are stacked in the axial direction of the cam shaft 1, the above change can easily be accomplished (not illustrated in FIG. 1). In this arrangement, the integrated valve 60 is characterized by the stacking of blocks as many as the required number of the ports, whereas a unit of block consists of an oil pressure valve and a housing thereof. As illustrated in FIGS. 1, 6A and 6B, when the spool valves 2 to 8 inclusive are arranged at both sides of the cam shaft 1, the integrated valve 60 is formed to be compact and almost flat, and can easily be installed within the oil pan due to upward and downward rooms available to installation.

Generally, the selector lever 500 has six gear positions: P (parking), R (reverse), N (neutral), D (drive), 2 (2nd gear) and L (low gear). As speed change is not made in the P range and N range positions, the transmission 300 is so designed that, even if automatic speed change is made, the torque is not transmitted.

Next, speed change in the D range position will be described, which description is also applicable to the other ranges in principle.

In the manual D range position, the respective spool valves 2 to 8 inclusive are set to the oil pressure communicating mode through the corresponding pins 14 to 20 inclusive shifted by the convex and concave parts of the cam shaft 1, which oil pressure mode is determined by the communicating ports in the D range line in the table given in FIG. 4. When the speed change is instructed to the cylindrical cam shaft 1 to the 1st speed position (1st in FIG. 4) of all the four gear modes of the vehicle speed by the ECU for AT, 70, then as illustrated in FIGS. 4 and 5, the multiple disc clutch C₀ receives the line pressure from the line pressure port (Pₛ in FIG. 4) 35 through the line pressure communicating passage 46, the groove of the spool valve 3, and the communicating port 40, and becomes to the operation state. In the same way, the multiple disc clutch C₁ receives the control pressure from the pressure control port (P_{c1} in FIG. 4) 36 through the control pressure communicating passage 47, the grooves of the spool valves 5, and the communicating port 42, and the control oil pressure is adjusted by the engaging oil pressure control valves 61 and 62 according to the vehicle speed. The multiple disc clutch C₂ and the multiple disc brake B₀ are communicated to the drain pressure communicating passage (Dr in FIG. 4) 48, and the multiple disc brakes B₁ to B₃ inclusive are communicated to the drain pressure communicating passage 49. Incidentally, the codes in FIG. 4 denote the types of the supply ports connected to the corresponding spool valves 2 to 8 inclusive. In FIG. 4, though P_{c1} and P_{c2} are different in code due to the use of two different engaging oil pressure control valves 61 and 62, but the same in the applicable pressure valve range (range from the line pressure as the maximum to lower pressure level). Furthermore, the spool 2, for example, in FIG. 4 means the spool valve 2.

When the speed change is instructed to the cylindrical cam shaft 1 from the 1st gear position to the 2nd gear position (2nd in FIG. 4) by the ECU for AT, 70, the cylindrical cam shaft 1 is shifted by the step motor 12 to the 2nd gear position and the respective spool valves 2 to 8 inclusive are shifted accordingly. As a result, as illustrated in the boxes where "D range" and "2nd" meet each other in FIG. 4, the multiple disc clutch C₁ is communicated with the line pressure port (Pₛ) 46, the multiple disc brake B₂ is communicated with the control pressure communicating passage (P_{c2}) 50, and the other multiple disc clutches C₀, C₂ and C₃ and multiple disc brakes B₀, B₁ and B₃ are maintained in the same state as the 1st gear position. The multiple disc clutches C₀ to C₃ inclusive and multiple disc brakes B₀ to B₃ inclusive within the transmission 300 are operated at the oil pressure determined by these gear positions to be ready for transmitting the torque at a different speed change ratio (2nd gear ratio). In this way, the control state is determined to have the transmission 300 fulfill functions of AT. Any other range or the shift-down operation is controlled in the same way as the above.

When the selector lever 500 is manually operated to change the gear position, the cylindrical cam shaft 1 is rotated by the connecting part 11, which is interlocked with the selector lever 500, whereby the positions of the respective spools 2 to 8 inclusive are switched, and the oil pressure communicating mode as specified by the ranges in FIG. 4 is established. At the same time in this state, the cylindrical cam shaft 1 is slid by the step motor 12 controlled by the ECU for AT, 70, and the oil pressure communicating mode according to the vehicle speed is established, and the automatic control is maintained.

Now, description will be given to the fail-safe function. As fails in a vehicle occur unexpectedly in general, and may occur while the vehicle is moving, it is necessary to cope with the fails upon the occurrence thereof. The fail referred to herein means not a fail to such an extent that the mechanism itself is mechanically damaged, but a fail in which the automatic control function is dysfunctioned. The fail-safe function is so set that, if the automatic control function should be dysfunctioned by some cause, the gear shift could be manually operated. Generally, as seen in conventional vehicles, the fail-safe function for AT is so set as to maintain the speed change state unchanged or shift the same to the 4th speed position (high-speed side). If the shift-down occurs in the event of a fail, the engine brake may work suddenly, and speed change shock may dangerously be caused. Without exception, therefore, the fail-safe function is so set to shift up the gear to the high-speed side in the event of a fail to avoid any possible speed change shock.

In FIG. 4, there is a certain range of the oil pressure communicating modes which are used in usual cases. In the multiple disc clutch C₀ (spool valve 3), for example, only the oil pressure communicating modes framed by a solid thick line are necessary. That is, in the L range, the required gear positions are only the 1st speed and the 2nd speed positions, and as far as the transmission is in normal operation, the gear will not be shifted to the 3rd speed or the 4th speed position. In the same way, in the 2 range, the required gear positions are only the 1st, the 2nd and the 3rd positions, and the gear will not be shifted to the 4th speed position. In the N, R and P ranges, the gear will not be shifted to any positions but to the 1st position. Accordingly, in the present invention, considering the above and for the fail-safe operation in the event of a fail, the communicating mode is set for the unused speed change positions as illustrated in FIG. 4. That is, the same communicating states as the communicating modes of the respective ranges framed by a solid thick line are set for the high-speed side communicating modes. In the L range, for example, the 2nd, or the highest-speed communicating mode Pₛ is set for the unused 3rd and 4th speed positions. To the 2, D, N, R and P ranges is applied the same way of setting for the fail-safe function.

In this embodiment, in addition to the above, the fail-safe mode positions are also set for the speed change mode side, i.e., the side of axial shift of the cam shaft 1 (columns of fail in FIG. 4). The effects of these fail-safe mode positions will be described later. Firstly, the fail-safe function will be described for a case where the 4th speed position is set to the fail-safe position.

When the ECU for AT, 70, judges that some fail has occurred, the ECU for AT, 70, shifts the cylindrical cam shaft 1, which has determined the speed change state, to the fail-safe position (4th speed position) by means of the step motor 12. Even if the automatic control is dysfunctioned by forcedly fixing the speed change position to the fail-safe position as the communicating modes have been set to the 4th position, or the high-speed, in the respective ranges as described in the above, the range shift can be made manually.

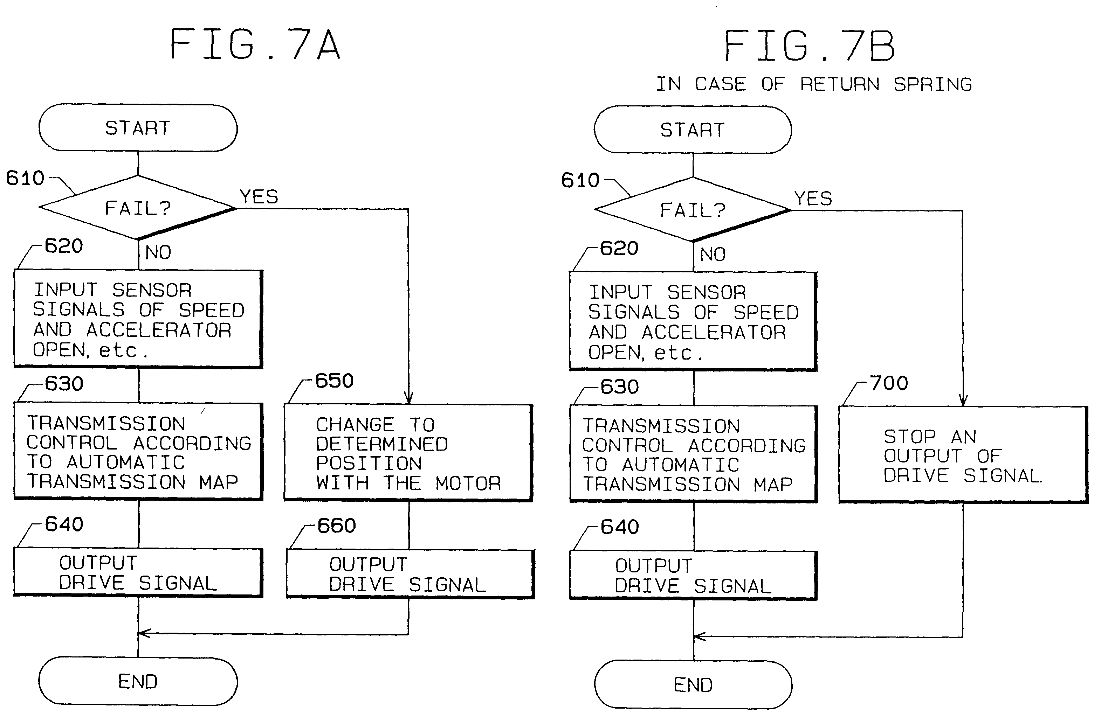

FIG. 7A illustrates a schematic flow chart related to the judgment of fail, of all the automatic control process programs of the ECU for AT, 70. The ECU for AT, 70, judges based on the error signals received from various sensors and the discrepancies in computations whether a fail has occurred or not in Step 610 in FIG. 7A. When the ECU for AT, 70, judges that a fail has occurred, the ECU for AT, 70, proceeds to Step 650 and shifts the cam shaft 1 to the fail-safe position (4th position). In the fail-safe position, though speed change equivalent to the automatic speed change can not be completely achieved (e.g., starting at the 2nd in the L range), at least the speed change function under manual control can be maintained.

When a fail has occurred in the driving control of the stepping motor 12, the ECU for AT, 70, cuts off the driving by the stepping motor 12, and forcedly shifts the cam shaft 1 to the fail-safe position (4th speed position) by means of the return spring 54, which process is illustrated by a flow chart in FIG. 7B. When the ECU for AT, 70, judges that the driving control of the stepping motor 12 has been failed which judgment is based on the error signals received from various sensors, the ECU for AT, 70, releases the stepping motor 12 to the free state, and shifts the cylindrical cam shaft 1 to the fail-safe position (4th speed position) by means of the extending force of the return spring 54. In this state, one of the manual ranges of P, R, N, D, 2 and L is selected by operating the selector lever 500, and the cylindrical cam shaft 1 is rotated by the connecting part 11, and the positions of the respective spool valves 2 to 8 inclusive are controlled.

In the above arrangement, regardless of the speed change position in which a fail has occurred, speed change shock can be eased. For example, if a fail has occurred when the selector lever 500 is in the 2 range and the gear shift is in the 2nd speed position, the cam shaft 1 will shift from the 2nd speed position at the time of fail to the 3rd speed position and then to the 4th speed position without shifting to the 1st speed position side, i.e., the low-speed side. As the cam shaft 1 will shift gradually to the high-speed side, there is no speed shift shock by engine brake as seen in shift-down operation.

The return spring 54 may be provided at the outside of the housing 28 or substituted by force produced by means of another mechanism. In the arrangement that automatic control and manual control are interchanged, it may also be so arranged that, wherever the return spring 54 is provided, the return spring 54 accumulates force to be enough to rotate the cam shaft 1 in the rotational direction to the stopper position 1a. Furthermore, it may also be so arranged that the cam shaft 1 is returned by the force of the stepping motor 1.

In view that, in the positions of the spool valves 2 to 8 inclusive in the event of fail, the cam shaft 1 is shifted to the stopper position 1a by the force of the return spring 54, the fail-safe position may separately be provided instead of the 4th speed position which is generally used as the fail-safe position of the cam shaft 1. In FIG. 4, the fail-safe position is indicated in a column next to the 4th speed column. Most fails occur unexpectedly, and possible causes thereof can not be predicted. In some cases, the oil pressure adjustment function is dysfunctioned, and in this event, the oil pressure will vary sharply, and the multiple disc clutches C₀ to C₂ inclusive, which are hydraulically operated, will vary sharply. As a result, sharp speed change will be caused to the AT, which is called speed change shock. It is, therefore, necessary to provide some measures to avoid this speed change shock. As fail-safe mode positions to avoid the speed change shock, the respective spool valves 2 to 8 inclusive in the communicate state are fixed to a half-opened position, which is not generally used though, to make the communicating state thereof to be so in the half-communicating state, so that sharp oil pressure change due to the fail can be avoided. This arrangement is a specially effective for such an automatic transmission that is applied to a system which directly controls the clutch pressure as the present invention. As the normal control is maintained as far as oil pressure remains in normal supply even if in the half-communicate state, there is no problem to set the respective spool valves 2 to 8 inclusive to the half-communicating state.

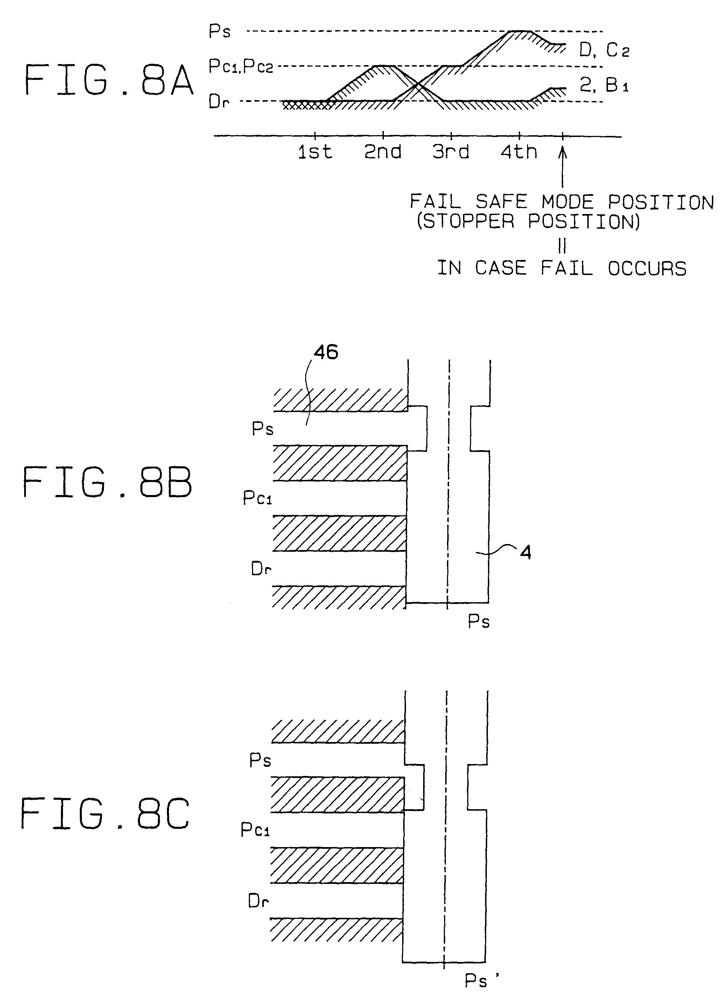

FIG. 8A illustrates a fragmentary cross-sectional view of the convex and concave parts on the outer periphery of the cam shaft 1 cut in the axial direction thereof, which are used for determining the positions of the respective spool valves 2 to 8 inclusive as fail-safe positions as described in the above. The axis of abscissa indicates the axial direction of the cam shaft 1 with respect to the 1st speed to 4th speed positions and the fail-safe positions. The axis of ordinate indicates the spool valve positions as positions communicated with the respective oil pressure communicating passages, i.e., the drain pressure port Dr, the control pressure ports P_{c1} and P_{c2}, and the line pressure port Pₛ in order of location from bottom to top. The hatched graphs in this figure indicate the spool valve groove positions when the cam shaft 1 is shifted in the axial direction with respect to the D range in the multiple disc clutch C₂ (spool valve 4) and the 2nd range in the multiple disc brake B₁ (spool valve 7). The spool valve 4 in the 4th speed position is, as illustrated in FIG. 8B, in a position where the groove of the spool valve 4 is fully coincided with the line pressure communicating passage 46. When the spool valve 4 is shifted to the fail-safe position, the groove of the spool valve 4 is, as illustrated in FIG. 8C, shifted downwards to be half-communicated (half-opened) to the line pressure communicating passage 46, narrowing the opening of the spool valve 4 to control the pressure change. As a result, even if the pressure is to sharply vary in the event of fail, the pressurized oil can gradually flows in and flow out through the thus narrowed opening part to avoid the speed change shock due to the speed change to the fail-safe position.

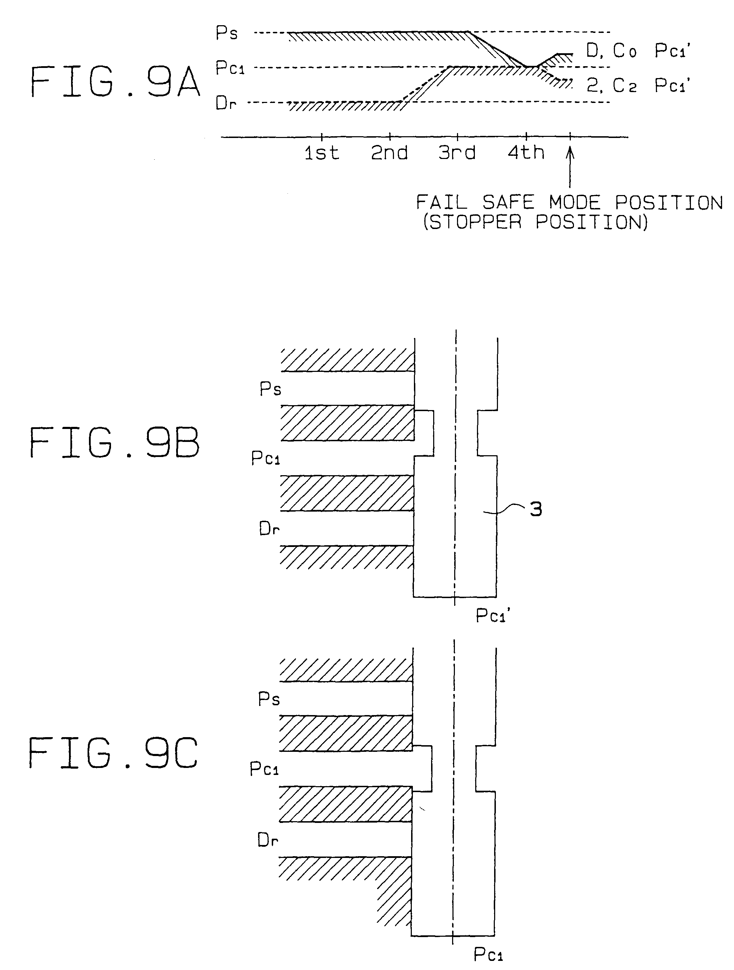

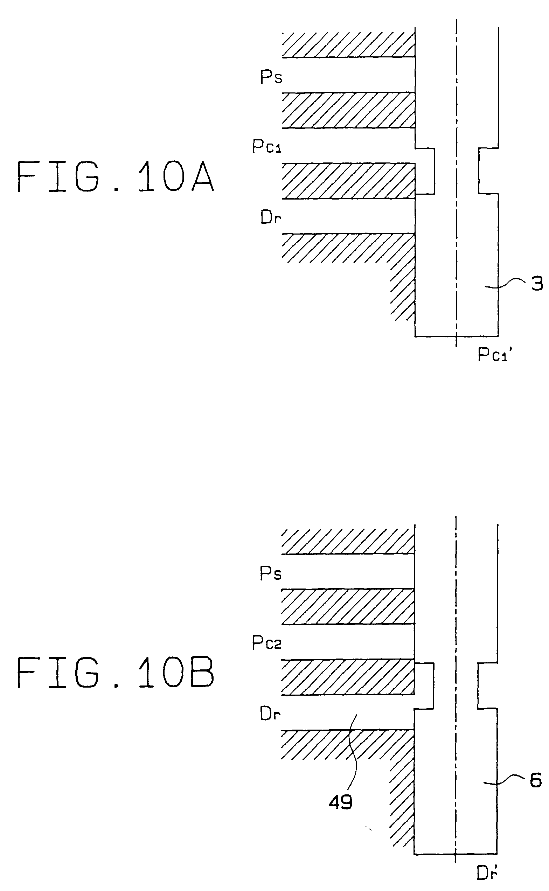

The position illustrated in FIG. 8C is applicable not only to the D range in the multiple disc clutch C₂ (spool valve 4) but also to any other spool valve as far as the 4th speed position is communicated with the line pressure port (Pₛ). In the same way, FIG. 9A illustrates the groove positions of the spool valves 3 and 4 of the multiple disc clutch C₀ in the D range and multiple disc clutch C₂ in the 2 range respectively. In the event of fail, the spool valve 3 will be shifted to a position illustrated in FIG. 9B, and in the normal condition, the spool valve 3 in a position illustrated in FIG. 9C. When the spool valve 3 is in a position to be communicated with the control pressure communicating passage 47, the spool valve 3 can be shifted in either directions to produce the half-opened state, the selection of which depends on which direction should be preferable for the design of the cam shaft 1. The position of the spool valve 3 in the event of fail, however, is set to a position where the 4th speed position is in the half-opened state, which is a conventional fail-safe position, as a larger communicating hole is not required in the 4th speed position, then the shift amount of the spool valve 3 can be saved. In FIG. 10A, when the spool valve 3 in the 2 range is positioned to the fail-safe position, the spool valve 3 is shifted downwards and the half-opened state is produced. The spool valve 6 in the 2 range, which is in a position where the spool valve 6 in the 4th mode is communicated with the drain pressure communicating passage 49 in FIG. 8A, is shifted upwards by a small amount as illustrate din FIG. 10B as the spool valve 6 can not move further downwards.

Of course, in the cam shaft 1 with the above fail-safe mode positions, there is no need to always set the spool valves 2 to 8 inclusive to the respective fail-safe mode positions, but the 4th mode position may be used by means of motor-driven shift.

The spool valves 2 to 8 inclusive may also be so arranged as another fail-safe means that, in preparation for an event that the oil passage ports or groove positions of the respective spool valves 2 to 8 inclusive should be locked in positions where the oil passage ports or grooves are not communicated with any of the oil pressure supply passages 46 to 51 inclusive, the oil passage ports or grooves are designed to be at least wide enough to slightly be communicated with the respective oil pressure communicating passages 46 to 51 inclusive.

It is preferable that the line pressure communicating passage 46, the control pressure communicating passage 47 and the drain pressure communicate passage 48 should be arranged in order of remoteness from the cam shaft 1. This is because the projection ratios of the pins 14 to 20 inclusive to the side of the cam shaft 1 vary according to the positions of the spool valves 2 to 8 inclusive and the forces that thrust back the pins 14 to 20 inclusive vary according to the difference in the internal pressures of the spool valves 2 to 8 inclusive. This will be further described in the following paragraphs. Incidentally, the effect of the above arrangement of the pressure communicating passages 46 to 48 inclusive can be achieved as far as the arrangement is similar to the above, not exactly the same as the arrangement of the integrated valve 60 of the first embodiment, whether the arrangement is of only the automatic control or of manual control.

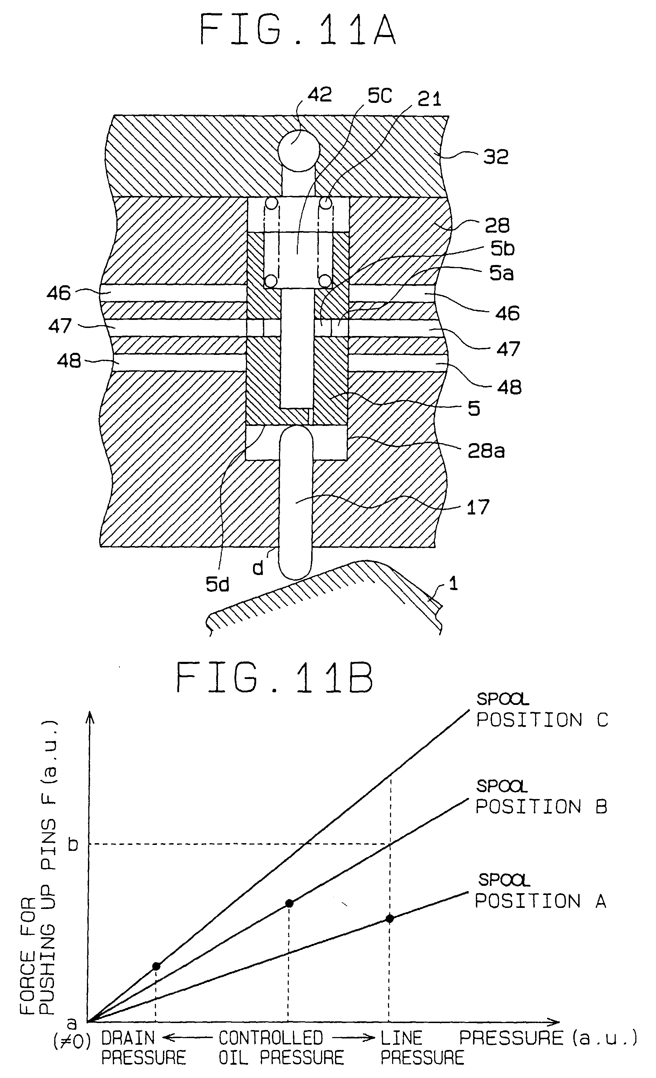

FIGS. 11A and 11B take the spool valve 5 by way of examples and illustrate the variance in the force required for thrusting up the pin 17 according to the change in oil pressure, to which force the groove of the cam shaft 1 is subjected differently according to the positions A to C inclusive of the respective oil pressure communicating passages 46 to 48 inclusive and which force is required for shifting the cam shaft 1. When the groove 5a of the spool valve 5 is in the position C, i.e., when the spool valve 5 is in the lowest position and nearest to the cam shaft 1, the pin 17 is the most projected to the side of the cam shaft 1. In this position, when the cam shaft 1 shifts and thrusts up the pin 17, the pin 17 is subjected to the rotational moment with a point d used as a fulcrum. Therefore, the more the pin 17 is projected, the more the pin 17 is subjected to prying force. In this case, the larger the force required for thrusting up the pin 17 is, the larger the force of prying the pin 17 is. Accordingly, if such an oil pressure communicating mode is selected that reduces the pressure on the pin 17 in the position C where the pin 17 is the most projected, the force required for thrusting up the pin 17 can be saved, and consequently the force of prying the pin 17 can also be reduced. Specifically, when the groove 5a of the spool valve 5 is shifted from the position A to the position B and to the position C and related to the communicated supply oil pressure as illustrated by black spots in FIG. 11B, the maximum force required for thrusting up the pin 17 is only the maximum control oil pressure indicated by a point b on which the line pressure and the line of the position B intersect each other. In other words, by allocating the communicating passage for the line pressure, the highest pressure, to the position A and the communicating passage for the drain pressure, the lowest pressure, to the position C, the force required for driving the cam shaft 1 can be saved, and consequently the pin 17 can be protected from being deformed. Furthermore, the force for driving the stepping motor 12, the driving source for the cam shaft 1, can also be saved, and consequently the whole system can be downsized. Moreover, when the force required for manually operating the selector lever 500 can be saved.

### (Second Embodiment)

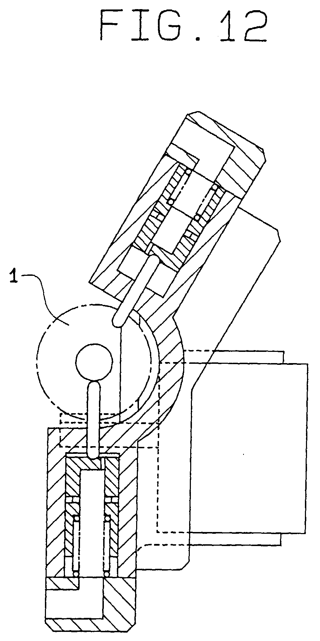

As the position of the spool valves 2 to 8 inclusive disposed at both sides of the cam shaft 1 has comparatively high degree of freedom, various arrangements are possible besides the arrangement illustrated in FIG. 1. For example, FIG. 12 illustrates a modification of the arrangement illustrated in FIG. 6A by angling the spool valves 2 to 8 inclusive disposed at both sides of the cam shaft 1 with respect to the axis of the cam shaft 1 instead of disposing the spool valves 2 to 8 inclusive on the same plane. Another modification (not illustrated) is that all the spool valves 2 to 8 inclusive are disposed in a row at one side of the cam shaft 1 to form a longitudinal arrangement. Particularly, these modifications can be compactly installed within the oil pan, for example, which has a little room for installation, according to the configuration of the transmission (300 in FIG. 2) of the AT body.

### (Third Embodiment)

When the spool valves 2 to 8 inclusive disposed at one side of the cam shaft 1 are rearranged to be disposed in a plurality of rows on a plane, the cam shaft 1 can be substituted by a cam plate for the same effect. The cam plate is of linear motion mechanism in two axial directions on the plane thereof. Specifically, the cam plate is provided with convex and concave parts on the surface, which is equivalent to the cam shaft 1 unfolded on a plane, and spool valves 2 to 8 inclusive are disposed on the cam plate through the pins 14 to 20 inclusive. When the cam plate makes linear motions in the first direction, which corresponds to the axial direction of the cam shaft 1, and in the second direction, which is different from the first direction (at right angles to the first direction in the extreme case), on the plane thereof by means of rack and pinion or other means, the manual control and automatic control of the above embodiment can be obtained. More specifically, the spool valves 2 to 8 inclusive are disposed in parallel with each other as required and specified on the cam plate; the speed change among the 1st speed, 2nd speed, 3rd speed and 4th speed positions is made by automatically driving the cam plate by means of the rack and pinion mechanism of the stepping motor 12 as the first direction (first mechanism); and the speed change shift is manually operated through the manual control connected to the selector lever 500 by means of the rack and pinion mechanism as the second direction (second mechanism). This cam plate may not be a complete flat plate, but be a curved plate having sector cross section as a part of the cylindrical side, which may be expressed as a compromise between the cam shaft 1 and the cam plate.

In the above first embodiment, manual control is made by the rotational motion of the cylindrical cam shaft 1 and automatic control is made by the linear motion thereof in the axial direction. Of course, even if manual control is made by the linear motion of the cylindrical cam shaft 1 in the axial direction and automatic control is made by the rotational motion thereof, the same effect of the present invention as the above can be obtained. In this reverse arrangement, however, the stepping motor 12 in FIG. 1 is interlocked with the rack 10, and mechanically connected with the selector lever 500 through a gear disposed in the position of the stepping motor 12, which position is illustrated in FIG. 1. Furthermore, besides the mechanism illustrated in FIG. 1, it may also be so arranged that the rotation of the stepping motor 12 for automatic control is directly connected to the cam shaft 1 and manually slid together by the mechanism of the rack 52. Moreover, the size of the cylindrical cam shaft 1 may not be confined to the size indicated in FIG. 1. For example, the diameter of the cylindrical cam shaft 1 may be enlarged to such an extent that the cylindrical cam shaft 1 is transformed to be almost a cylindrical drum. In addition, the shape of the spool valves 2 to 8 inclusive may not be confined to be cylindrical but be of any shape, as far as the hydraulic valve function as described in the above can be maintained.

### (Fourth Embodiment)

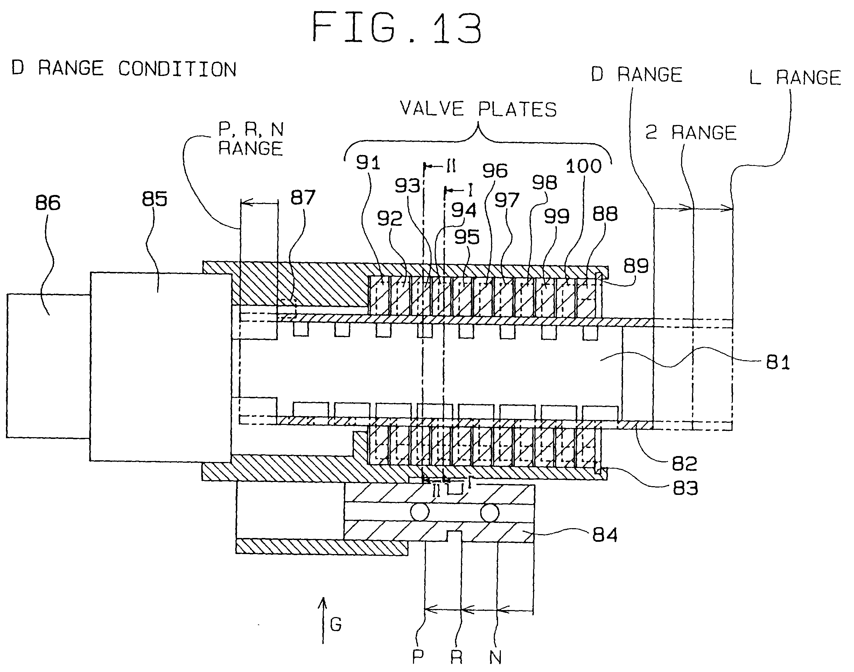

FIG. 13 illustrates a cross-sectional view of the integrated valve 60 with another modification as the fourth embodiment. In this embodiment, a cylindrical rotary spool 81 directly connected to a motor 85 fixed to a housing 83 is housed within the housing 32 by being so fittingly installed into a freely movable slide sleeve 82 as to be rotatably around the spindle of the motor 85. The slide sleeve 82 is connected to a connecting mechanism (not illustrated), mechanically connected to the selector lever 500 for speed change, and slid in the axial direction to the speed positions of the D, 2 and L ranges and common P, R and N range. Valve plates 91 to 100 inclusive, each of which is commonly provided with the above control pressure port, drain pressure port and oil pressure port to each friction engaging element, are disposed around the slide sleeve 82, fittingly inserted thereinto, and stacked in the axial direction. The outer peripheries of the valve plates 91 to 100 inclusive are supported by the housing 83.

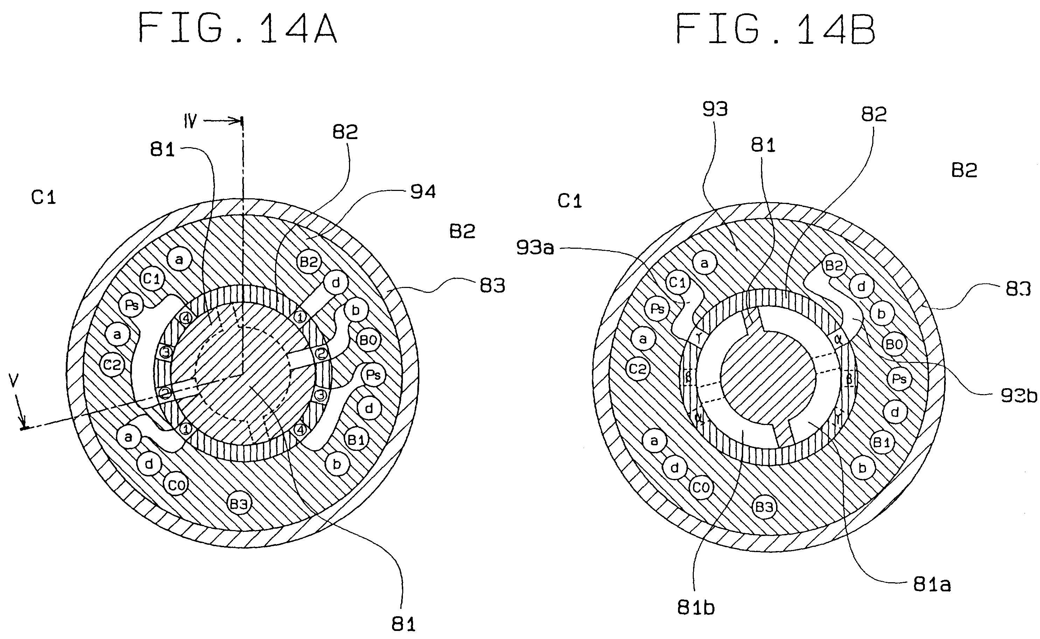

The outer periphery of the rotary spool 81 is provided with grooves which determine the communication with oil pressure passages to each friction engaging element, and the positions of the grooves are determined by the rotation of the motor 85. Furthermore, as illustrated in FIG. 14A, communicating holes (1) to (4) inclusive are made through the slide sleeve 82 in the peripheral direction. As these communicating holes (1) to (4) inclusive are communicated with the valve plates 91 to 100 inclusive, the communication relations of these communicating holes (1) to (4) inclusive to the oil pressure ports provided in the respective valve plates 91 to 100 inclusive are switched to control the switching of the oil pressure passage to each friction engaging element.

The valve plates 91 to 100 inclusive inserted into the slide sleeve 82 from the side of the motor 85 in order are provided with a blind plate cover 88 in adjacency to the valve plate 100.

The blind plate cover 88 is fixed with a circlip 89 to limit the axial movement of the valve plates 91 to 100 inclusive. The valve plates 91 to 100 inclusive are so arranged that the respective valve plate pairs of 91 and 92, 93 and 94, 95 and 96, 97 and 98, and 99 and 100 set the specified oil pressure passages, and each pair of the valve plates 91 to 100 inclusive shares oil pressure passages to a plurality of friction engaging elements.

The communication of oil pressure passages among the valve plates 91 to 100, the slide sleeve 82 and the rotary spool 81 will now be described as to the valve plates 93 and 94 by way of examples.

FIGS. 14A and 14B illustrate the cross-sectional views of the valve plates 93 and 94. FIG. 14A illustrates a cross-sectional view of the valve plate 94 taken along I-I of FIG. 13, while FIG. 14B illustrates a cross-sectional view of the valve plate 93 taken along II-II of FIG. 13. Incidentally, the cross-sectional view in FIG. 13 is equivalent to a cross-sectional view taken along IV-V of FIG. 14A. As illustrated in FIG. 14, the valve plates 93 and 94 are provided with a plurality of oil pressure ports, and the encircled codes denote the codes of the hydraulic units and friction engaging elements respectively. The codes C₀ to C₂ inclusive denote the ports communicated with the multiple disc clutches C₀ to C₂ within the transmission 300 in the same way as the first embodiment, B₀ to B₃ inclusive denote the ports communicated with the multiple disc brakes C₀ to C₃ inclusive, d denotes the drain pressure port, a denotes a port corresponding to the control pressure port P_{c1} of the first embodiment, b denotes a port corresponding to the control pressure port P_{c2} of the first embodiment, and Pₛ denotes a port corresponding to one of the line pressure port 35 to 37 inclusive of the first embodiment.

These ports C₀ to C₂ inclusive, B₀ to B₃ inclusive, d, a, b and Pₛ are positioned in common with the other valve plates 91, 92 and 95 to 100 inclusive, and connected to the transmission 300 and others by a pipe (not illustrated) from the blind cover plate 88 disposed outermost. Accordingly, the pressure oil and others are supplied to the valve plates 93 and 94 respectively through the blind cover plate 88 and these ports C₀ to C₂ inclusive, B₀ to B₃ inclusive, d, a, b and Pₛ of the valve plates 95 to 100 inclusive.

As the valve plate 93 is provided with a communicating passage 93a running from the port C₁ to the slide sleeve 82 and a communicating passage 93b running from the port B₂ to the slide sleeve 82, the valve plates 93 and 94 are a pair in charge of the multiple disc clutch C₁ and the multiple disc brake B₂. The other pairs of the valve plates 91 and 92, 95 and 96, 97 and 98, and 99 and 199 are also provided with communicating passages communicated with other ports in the same way.

The slide sleeve 82 is provided with the communicating holes (1) to (4) inclusive at the left side and at the right side respectively, symmetrically disposed with each other with respect to the center of the slide sleeve 82. The rotary spool 81 is arranged to rotates ±45°. The numbers of the communicating holes (1) to (4) inclusive illustrated in FIG. 1 correspond to the speed change of the vehicle speed. The communicating hole (1) corresponds to the 1st speed position and communicates with the drain pressure, the communicating hole (2) communicates with the control pressure, and the communicating holes (3) and (4) communicate with the line pressure. FIG. 14 illustrates the 2nd speed position. In this position, the oil pressure from the control port b, i.e., the control pressure port P_{c2}, is supplied to a notch groove provided on the rotary spool 81 through the 2nd speed position communicating hole (2) of the slide sleeve 82. The notch groove communicates with the communicating port B₂ (multiple disc brake B₂) of the valve plate 93 through a hemispherical passage 81a and a communicating hole α of the slide sleeve 82 illustrated in FIG. 14B. Therefore, the multiple disc brake B₂ is supplied with the pressure oil from the control pressure port P_{c2}. In the same way, communicating holes β and γ of the slide sleeve 82 are positioned so as to meet other valve plates and communicate with oil pressure ports provided therein. The other communicating hole (2) of the slide sleeve 82 communicates with the port Pₛ, and, in the same way as the above, further communicates with the communicating port C₁ of the valve plate 93 through the notch groove of the rotary spool 81, a hemispherical passage 81b illustrated in FIG. 14B, and the communicating hole γ of the slide sleeve 82 again. Accordingly, the line pressure from the port Pₛ is supplied to the multiple disc clutch C₁. When the speed change is switched to the 3rd speed position and to the 4th speed position, the rotary spool 81 is rotatively driven by the motor 85, the notch groove provided on the rotary spool 81 is positioned to meet the communicating holes (3) and (4) of the slide sleeve 82, whereby the port communication is switched. The positions where the communicating passages of the respective valve plates 91 to 100 inclusive and the communicating holes α, β and γ of the slide sleeve 82 are to be made are determined so that the communication states of the oil passages in the respective speed change positions can be related to each other as illustrated in FIGS. 4 and 5 of the first embodiment.

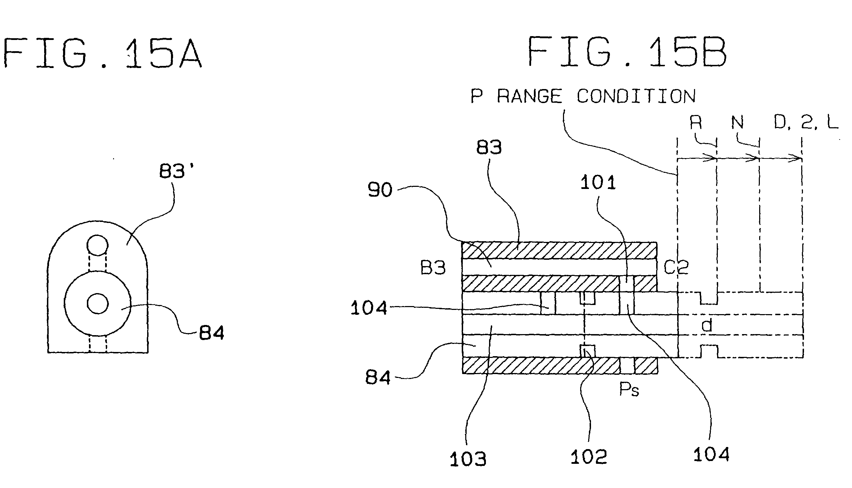

As illustrated in FIG. 13, a slide valve 84 is provided at the side under the housing 83 to form another hydraulic valve. The slide valve 84 also is connected to the connecting mechanism (not illustrated) and complements the slide sleeve 82; when the slide sleeve 82 is in the P, R or N range illustrated in FIG. 13, the slide valve 84 is interlocked with the slide sleeve 82 and take charge of valve switching for shifting to the P, R or N range. As illustrated in FIGS. 15A and 15B, in the slide valve 84, the line pressure port Pₛ or the drain pressure port d is communicated with the communicate ports B₃ and C₂. FIG. 15B illustrates the P range state. The housing 83 is provided with a passage 90 which is communicated with the communicating ports B₃ and C₂ and, in addition, a communicating hole 101 which is communicated with a hole into which the slide valve 84 is inserted.

The slide valve 84 is provided with a communicating hole 103 in the axial center thereof, which is communicated with the drain port d, and a plurality of communicating holes 104 towards the outer periphery thereof. Furthermore, the slide valve 84 is provided with an annuler passage 102. In FIG. 15B, the hole 101 of the housing 83 is positioned to meet the respective communicating holes 104 of the slide valve 84. Accordingly, both the communicating ports B₃ and C₂ are communicated with the drain pressure port d. In the same way, when the annular passage 102 is positioned to meet the hole 101, the communicating ports B₃ and C₂ are communicated with the line pressure port Pₛ and supplied with the line pressure.

When the shift is in the P, R or N range, as illustrated in FIG. 4, only the communicate ports B₃ and C₂, of all the ports, need the oil pressure switching. For this reason, the other ports B₀, B₁, B₂, C₀ and C₁, which are in the fixed state, can be communicated at the side of the rotary spool 81 above the slide valve 84. Another advantage is that the working stroke of the rotary spool 81 can be shortened.

In the integrated valve 60 of the fourth embodiment, the rotary spool 81 is directly connected to the motor 85. The oil pressure passage is automatically controlled by rotating the motor according to the signal from the ECU for AT, 70, and whereby shifting the grooves formed around the rotary spool 81. When the oil passages of the slide sleeves 82 and slide valve 84 are switched by the operation of the selector lever 500, the valves for the respective oil pressure communicating passages can manually be switched. Therefore, again in the integrated valve 60 of the fourth embodiment, both the automatic and manual controls can be achieved. As the integrated valve 60 of the fourth embodiment also can comply with various transmission modes by changing the valve plates 91 to 100 inclusive, this embodiment is featured by generality thereof. As the communicating mode and others of the respective oil pressure passages are the same as those of the first embodiment, the detail description of the operations of the rotary spool 81 and slide sleeve 82 will be omitted herein.

In general, the number of spool valves and communicating modes illustrated in FIG. 4 depends on the structure of the transmission 300, and the setting conditions of the spool valves and communicating modes depends on the number and quality of the multiple disc brakes and multiple disc clutches.

As described in the above, the integrated valve according to the present invention is controlled in two different ways, automatic control and manual control, and provided with a fail-safe means for hydraulic control. Due to this structure, even if the automatic control is dysfunctioned by an error, the control of AT can be maintained by manual control. As a result, vehicles with the integrated valves according to the present invention can avoid any inconvenience caused particularly when vehicles are restarting in downhills, uphills, mountainous roads, snowy roads. Furthermore, not limited to the cylindrical cam shaft and the rotary spool, any the integrated valve of any hydraulic control type equipped with an automatic control mechanism and a manual control mechanism can have the same effect. Therefore, the hydraulic controller according to the present invention can provide, due to the integrated valve equipped with both an automatic control mechanism and a manual control mechanism, a light, compact and reliable AT without losing any part of the functions of the conventional ATs.

## Claims

1. A hydraulic controller (400) for automatic transmissions, in particular for use in vehicles, which switches and controls the engagement and disengagement of a plurality of friction engaging elements (C₀, B₀,C₁, C₂, B₁, B₂, B₃) provided within an automatic transmission by switching a plurality of speed change positions (L, 2, D, N, R, D) by switching the oil passages (39 to 45) to be communicated with said friction engaging elements, said hydraulic controller comprising:
an integrated valve (60) for switching the oil passages to be communicated with the respective friction engaging elements, said integrated valve having a plurality of hydraulic valves (2 to 8, 88 to 100) and a valve switching means (1, 11, 12, 14 to 20, 81, 85, 86) for controlling said plurality of hydraulic valves directly and simultaneously;
an automatic hydraulic valve switching means (12, 70) for automatically driving and controlling said valve switching means; and
a manual hydraulic valve switching means (500, 11) for manually driving and controlling said valve switching means, characterized in that
said automatic hydraulic valve switching means drives said valve switching means to cause a first movement in a first direction and said manual hydraulic valve switching means which is independently movable to said automatic hydraulic valve switching means drives said valve switching means to cause a second movement in a second direction, such that said first and second directions are different from each other, and said first and second movements are independent of each other.

2. The hydraulic controller for automatic transmissions according to claim 1, wherein said plurality of hydraulic valves comprise spool valves (2 to 8) provided for respective friction engaging elements (C₀, B₀,C₁, C₂, B₁, B₂, B₃); and
said valve switching means is a cam shaft (1) which travels and drives said spool valves, said cam shaft having a convex and concave parts.

3. The hydraulic controller for automatic transmissions according to claim 2, wherein said plurality of spool valves (2 to 8) are symmetrically disposed with respect to the axis of said cam shaft (1).

4. The hydraulic controller for automatic transmissions according to claim 2 or 3, wherein each of said spool valves (2 to 8) contacts the convex and concave parts of said cam shaft (1) through each pin (14 to 20) of each of said spool valves which travels in the sliding direction of each of said spool valves;
each of said spool valves is equipped with communicating passages (46, 47, 48, 49, 50, 51) for line pressure which is the preset high presssure to be supplied to each friction engaging element, engagement pressure (Pc) for engaging each friction engaging element, and drain pressure (Dr) for disengaging each friction engaging element; and
each communicating passage is disposed in the order of drain pressure, engagement pressure and line pressure with increasing distance from said cam shaft.

5. The hydraulic controller for automatic transmissions according to one of the claims 2 to 4, wherein said automatic hydraulic valve switching means is a means for switching said oil passages by shiftably driving said cam shaft (1) in the axial direction thereof; and said manual hydraulic valve switching means is a means for switching said oil passages by driving said cam (1) shaft in the rotational direction thereof.

6. The hydraulic controller for automatic transmissions according to one of the claims 2 to 4, wherein said manual hydraulic valve switching means is a means for switching said oil passages by shiftably driving said cam shaft (1) in the axial direction thereof; and
said automatic hydraulic valve switching means is a means for switching said oil passages by driving said cam (1) shaft in the rotational direction thereof.

7. The hydraulic controller for automatic transmissions according to one of the claims 1 to 6, wherein said automatic hydraulic valve switching means is a means for switching only the forward speed change position (1st, 2nd, 3rd, and 4th) in said automatic transmission (AT); and
said manual hydraulic valve switching means is a means for switching at least the forward (L, 2, D) and reverse (R) positions.

8. The hydraulic controller for automatic transmissions according to one of the claims 1 to 7, further comprising:
a judging means (610 to 660) for judging whether or not speed change control is normal; and
a fail-safe positioning means (54, 55) for positioning said hydraulic valves (2 to 8) to the preset fail-safe position when said judging means judges that the speed change control is in the fail state.

9. The hydraulic controller for automatic transmissions according to claim 8, wherein said fail-safe position is in the fastest speed position (4th) of all the speed change positions.

10. The hydraulic controller for automatic transmissions according to claim 8, wherein said fail-safe position is in such a position that is nearby the fastest speed position (4th) of all the speed change positions and throttles said oil passages (46 to 51) to the respective friction engaging elements in said fastest speed change position.

11. The hydraulic controller for automatic transmission according to one of the claims 1 to 10, further comprising a forced hydraulic valve switching means (54, 55, 13) for forcedly switching said valve switching means and driving shiftably said hydraulic valves (2 to 8; 88 to 100) when said automatic hydraulic valve switching means is failed and the driving of said automatic hydraulic valve switching means is stopped so that said hydraulic valves is positioned to said fail-safe position.

12. A hydraulic controller according to claim 1, wherein said hydraulic valves comprise
a plurality of valve plates (91 to 100) including oil passages to be connected to said respective friction engaging elements, and respective communicating passages for line pressure to maintain the engagement of said friction engaging elements, engagement pressure for engaging said friction engaging elements, and drain pressure for disengaging said friction engaging elements;
a cylindrical rotary spool (81) including a pluraltiy of communicating passages (81a, 81b) on the outer periphery for switching the oil passages to be communicated to the respective friction engaging elements;
a cylindrical sleeve (82) fittingly inserted into between said valve plate (91 to 100) and said rotary spool (81) for switching the oil passages to be communicated to the respective frictions engaging elements;
an automatic oil passage switching means for automatically driving and controlling the oil passage switching of said rotary spool (81), and
a manual oil passage switching means for switching and controlling the oil passages by manually driving and controlling said sleeve (82).

13. The hydraulic controller for automatic transmissions according to claim 12, wherein said automatic oil passage switching means is a means for switching the oil passages by controllably driving said rotary spool (81) in the rotational direction thereof; and
said manual oil passage switching means is a means for switching the oil passages by controllably driving said rotary sleeve (82) in the axial direction thereof.

14. The hydraulic controller for automatic transmissions according to claim 12 or 13, wherein said automatic oil passage switching means is a means for switching only the forward speed change position (1st, 2nd, 3rd and 4th); and
said manual oil passage switching means is a means for switching at least the forward (L, 2, D) and reverse (R).

## Patentansprüche

1. Hydraulische Steuerung (400) für Automatikgetriebe, insbesondere für die Verwendung in Fahrzeugen, welche das Ein- und Ausrücken einer Mehrzahl von Reibungseinrückelementen (C₀, B₀, C₁, C₂, B₁, B₂, B₃), die innerhalb eines automatischen Getriebes angeordnet sind, durch Wechseln einer Mehrzahl von Fahrstufenstellungen (L, 2, D, N, R, D) durch Umschalten von Ölkanälen (39 bis 45), die mit den Reibungseinrückelementen verbunden werden sollen, schaltet und steuert, wobei die hydraulische Steuervorrichtung folgendes aufweist:
ein integriertes Steuerorgan (60) zum Umschalten der Ölkanäle, die mit den jeweiligen Reibungseinrückelementen verbunden werden sollen, wobei das integrierte Steuerorgan eine Mehrzahl von hydraulischen Ventilen (2 bis 8, 88 bis 100) und Ventilschalteinrichtungen (1, 11, 12, 14 bis 20, 81, 85, 86) aufweist, um die Mehrzahl hydraulischer Ventile direkt und gleichzeitig zu steuern;
eine automatische hydraulische Ventilschalteinrichtung (12, 70) für den automatischen Antrieb und die Steuerung der Ventilschalteinrichtung; und
eine manuelle hydraulische Ventilschalteinrichtung (500, 11) zum manuellen Antreiben und Steuern der Ventilschalteinrichtung,
dadurch gekennzeichnet, daß
die automatische hydraulische Ventilschalteinrichtung die Ventilschalteinrichtung antreibt, um eine erste Bewegung in eine erste Richtung zu verursachen, und die manuelle hydraulische Ventilschalteinrichtung, die unabhängig von der automatischen hydraulischen Ventilschalteinrichtung beweglich ist, die Ventilschalteinrichtung antreibt, um eine zweite Bewegung in eine zweite Richtung zu verursachen, so daß die erste und zweite Richtung voneinander verschieden sind, und die erste und zweite Bewegung voneinander unabhängig sind.

2. Hydraulische Steuerung für Automatikgetriebe nach Anspruch 1, dadurch gekennzeichnet, daß die Mehrzahl der hydraulischen Ventile Steuerkörper (2 bis 8) enthalten, die für die jeweiligen Reibungseinrückelemente (C₀, B₀, C₁, C₂, B₁, B₂, B₃) vorgesehen sind; und
das die Ventilschalteinrichtung eine Nockenwelle (1) ist, die sich hin- und herbewegt und die Steuerkörper antreibt, wobei die Nockenwelle konkave und konvexe Abschnitte aufweist.

3. Hydraulische Steuerung für Automatikgetriebe nach Anspruch 2, dadurch gekennzeichnet, daß die Mehrzahl der Steuerkörper (2 bis 8) in Bezug auf die Achse der Nokkenwelle (1) symmetrisch angeordnet sind.

4. Hydraulische Steuerung für Automatikgetriebe nach Anspruch 2 oder 3, dadurch gekennzeichnet, daß
jeder der Steuerkörper (2 bis 8) die konvexen und konkaven Abschnitte der Nockenwelle (1) jeweils durch einen Stift (14 bis 20) jedes Steuerkörpers berührt, der sich in der Gleitrichtung jedes Steuerkörpers hin- und herbewegt;
jeder der Steuerkörper mit Verbindungskanälen (46, 47, 48, 49, 50, 51) für den Leitungsdruck, welcher der voreingestellte Hochdruck ist dem jedes Reibungseinrückelement beaufschlagt werden soll, für den Einrückdruck (Pc) zur Einstellung jedes Reibungseinrückelements und für den Abströmdruck (Dr) zum Ausrücken jedes Reibungseinrückelements; und
jeder Verbindungskanal in der Reihenfolge des Abströmdrucks, des Einrückdrucks und des Leitungsdrucks mit ansteigender Entfernung von der Nockenwelle angeordnet ist.

5. Hydraulische Steuerung für Automatikgetriebe nach einem der Ansprüche 2 bis 4, dadurch gekennzeichnet, daß die automatische hydraulische Ventilschalteinrichtung eine Einrichtung zum Umschalten der Ölkanäle durch ein Verschieben der Nockenwelle (1) in ihrer Axialrichtung ist; und daß die manuelle hydraulische Ventilschalteinrichtung eine Einrichtung zum Umschalten der Ölkanäle durch den Antrieb der Nockenwelle (1) in ihrer Drehrichtung ist.

6. Hydraulische Steuerung für Automatikgetriebe nach einem der Ansprüche 2 bis 4, dadurch gekennzeichnet, daß die manuelle hydraulische Ventilschalteinrichtung eine Einrichtung zum Umschalten der Ölkanäle durch ein Verschieben der Nockenwelle (1) in ihrer Axialrichtung ist; und daß die automatische hydraulische Ventilschalteinrichtung eine Einrichtung zum Umschalten der Ölkanäle durch Antreiben der Nockenwelle (1) in ihrer Drehrichtung ist.

7. Hydraulische Steuerung für Automatikgetriebe nach einem der Ansprüche 1 bis 6, dadurch gekennzeichnet, daß die automatische hydraulische Ventilschalteinrichtung eine Einrichtung lediglich zum Wechseln der Vorwärtsgeschwindigkeitswechselposition (lst, 2nd, 3rd, 4th) in dem automatischen Getriebe AT ist; und
daß die manuelle hydraulische Ventilschalteinrichtung eine Einrichtung zum Wechseln zumindest der Vorwärts- (L, 2, D) und der Rückwärts-(R) Stellungen ist.

8. Hydraulische Steuerung für Automatikgetriebe nach einem der Ansprüche 1 bis 7, weiterhin gekennzeichnet durch:
eine Bewertungseinrichtung (610 bis 660) zur Bewertung, ob die Gangwechselsteuerung normal ist oder nicht; und
eine Ausfallsicherungspositionierungseinrichtung (54, 55) zur Positionierung der hydraulischen Ventile (2 bis 8) um sie in einem Ausfallsicherungsposition anzubringen, wenn die Bewertungseinrichtung beurteilt, das sich die Gangwechselsteuerung im Ausfallzustand befindet.

9. Hydraulische Steuerung für Automatikgetriebe nach Anspruch 8, dadurch gekennzeichnet, daß sich die Ausfallsicherungsposition in der schnellsten Gangposition (4th) von allen Gangwechselpositionen befindet.

10. Hydraulische Steuerung für Automatikgetriebe nach Anspruch 8, dadurch gekennzeichnet, daß sich die Ausfallsicherungsposition in so einer Position befindet, daß sie sich in der Nähe der schnellsten Gangposition (4th) von allen Gangwechselpositionen befindet und die Ölkanäle (46 bis 51) zu den jeweiligen Reibungseinrückelementen in die schnellste Gangwechselposition drosselt.

11. Hydraulische Steuerung für Automatikgetriebe nach einem der Ansprüche 1 bis 10, weiterhin gekennzeichnet durch eine zwangsbetätigte hydraulische Ventilschalteinrichtung (54, 55, 13) zum zwangweise Schalten der Ventilschalteinrichtung und zum Verschieben der hydraulischen Ventile (2 bis 8; 88 bis 100), wenn die automatische hydraulische Ventilschalteinrichtung ausfällt und der Antrieb der hydraulische Ventilschalteinrichtung gestoppt wird, so daß die hydraulischen Ventile in die Ausfallsicherungsstellung positioniert werden.

12. Hydraulische Steuerung nach Anspruch 1, dadurch gekennzeichnet, daß die hydraulischen Ventile enthalten:
eine Mehrzahl von Ventilplatten (91 bis 100) mit Ölkanälen, die mit den jeweiligen Reibungseinrückelementen verbunden werden sollen, und jeweilige Verbindungskanäle für den Leitungsdruck zur Beibehaltung des Einrückens der Reibungseinrückelemente, für den Einrückdruck zum Einrücken der Reibungseinrückelemente und für den Abströmdruck zum Ausrücken der Reibungseinrückelemente;
einen zylindrischen Drehsteuerkörper (81) mit einer Mehrzahl von Verbindungskanälen (81a, 81b) am äußeren Umfang zum Umschalten der Ölkanäle, die in Verbindung mit den jeweiligen Reibungseinrückelementen gebracht werden sollen;
eine zylindrische Hülse (82), die zwischen der Ventilplatte (91 bis 100) und dem Drehsteuerkörper (81) mit einer Passung eingesetzt ist, um die mit den Ölkanälen umzuschalten, die mit den jeweiligen Reibungseinrückelementen verbunden werden sollen;
eine automatische Ölkanalschalteinrichtung zum automatischen Antreiben und Steuern des Ölkanalschaltvorgangs des Drehsteuerkörpers (81), und
eine manuelle Ölkanalschalteinrichtung zum Umschalten und Steuern der Ölkanäle durch ein manuelles Antreiben und Steuern der Hülse (82).

13. Hydraulische Steuerung für Automatikgetriebe nach Anspruch 12, dadurch gekennzeichnet, daß die automatische Ölkanalschalteinrichtung eine Einrichtung zum Umschalten der Ölkanäle durch ein gesteuertes Antreiben des Drehsteuerkörpers (81) in seiner Drehrichtung ist; und
daß die manuelle Ölkanalschalteinrichtung eine Einrichtung zum Umschalten der Ölkanäle durch ein gesteuertes Antreiben der Drehhülse (82) in ihrer axialen Richtung ist.

14. Hydraulische Steuerung für Automatikgetriebe nach Anspruch 12 oder 13, danach gekennzeichnet, daß die automatische Ölkanalschalteinrichtung eine Einrichtung nur zum Schalten der Vorwärtsgeschwindigkeitswechselposition (1st, 2nd, 3rd und 4th) ist; und
daß die manuelle Ölkanalschalteinrichtung eine Einrichtung zum Schalten von zumindest der Vorwärts-(L, 2, D) und der Rückwärts-(R) Stellung ist.

## Revendications

1. Dispositif de commande hydraulique (400) pour transmissions automatiques, en particulier pour emploi dans des véhicules, qui assure la commutation et commande l'engagement et le désengagement d'une multitude d'éléments d'engagement à friction (C₀, B₀, C₁, C₂, B₁, B₂, B₃) prévus à l'intérieur d'une transmission automatique en assurant la commutation d'une multitude de positions de changement de vitesse (L, 2, D, N, R, D) en assurant la commutation de passages d'huile (39 à 45) devant communiquer avec lesdits éléments d'engagement à friction, ledit dispositif de commande hydraulique comportant :
une soupape intégrée (60) pour assurer la commutation des passages d'huile devant communiquer avec les éléments d'engagement à friction respectifs, ladite soupape intégrée comportant une multitude de soupapes hydrauliques (2 à 8, 88 à 100) et un moyen de commutation de soupape (1, 11, 12, 14 à 20, 81, 85, 86) pour commander ladite multitude de soupapes hydrauliques d'une façon directe et simultanée;
un moyen de commutation automatique de soupape hydraulique (12, 70) pour entraîner et commander automatiquement ledit moyen de commutation de soupape; et
un moyen de commutation manuelle de soupape hydraulique (500, 11) pour entraîner et commander manuellement ledit moyen de commutation de soupape, caractérisé en ce que : ledit moyen de commutation automatique de soupape hydraulique entraîne ledit moyen de commutation de soupape pour provoquer un premier déplacement dans une première direction et ledit moyen de commutation manuelle de soupape hydraulique qui est mobile indépendamment dudit moyen de commutation automatique de soupape hydraulique entraîne ledit moyen de commutation de soupape pour provoquer un second déplacement dans une seconde direction, de sorte que lesdites première et seconde directions sont différentes l'une de l'autre, et lesdits premier et second déplacements sont indépendants l'un de l'autre.

2. Dispositif de commande hydraulique pour transmissions automatiques selon la revendication 1, dans lequel ladite multitude de soupapes hydrauliques comprend des soupapes à bobine (2 à 8) prévues pour des éléments respectifs d'engagement à friction (C₀, B₀, C₁, C₂, B₁, B₂, B₃); et
ledit moyen de commutation de soupape est un arbre à cames (1) qui se déplace et entraîne lesdites soupapes à bobine, ledit arbre à cames ayant des parties convexes et concaves.

3. Dispositif de commande hydraulique pour transmissions automatiques selon la revendication 2, dans lequel ladite multitude de soupapes à bobine (2 à 8) sont disposées symétriquement par rapport à l'axe dudit arbre à cames (1).

4. Dispositif de commande hydraulique pour transmissions automatiques selon la revendication 2 ou 3, dans lequel chacune desdites soupapes à bobine (2 à 8) est en contact avec les parties convexes et concaves dudit arbre à cames (1) par l'intermédiaire de chaque pointeau (14 à 20) de chacune desdites soupapes à bobine qui se déplace dans le sens de coulissement de chacune desdites soupapes à bobine;
chacune desdites soupapes à bobine est munie de passages de communication (46, 47, 48, 49, 50, 51) pour la pression de canalisation qui est la haute pression préétablie devant être fournie à chaque élément d'engagement à friction, la pression d'engagement (Pc) pour l'engagement de chaque élément d'engagement à friction, et la pression de vidange (Dr) pour désengager chaque élément d'engagement à friction; et
chaque passage de communication est disposé dans l'ordre de la pression de vidange, de la pression d'engagement et de la pression de canalisation, la distance augmentant à partir dudit arbre à cames.

5. Dispositif de commande hydraulique pour transmissions automatiques selon l'une des revendications 2 à 4, dans lequel ledit moyen de commutation automatique de soupape hydraulique est un moyen pour assurer la commutation desdits passages d'huile en entraînant par déplacement ledit arbre à cames (1) dans sa direction axiale; et ledit moyen de commutation manuelle de soupape hydraulique est un moyen pour assurer la commutation desdits passages d'huile en entraînant ledit arbre à cames (1) dans sa direction de rotation.

6. Dispositif de commande hydraulique pour transmissions automatiques selon l'une des revendications 2 à 4, dans lequel ledit moyen de commutation manuelle de soupape hydraulique est un moyen pour assurer la commutation desdits passages d'huile en entraînant par déplacement ledit arbre à cames (1) dans sa direction axiale; et
ledit moyen de commutation automatique de soupape hydraulique est un moyen pour assurer la commutation desdits passages d'huile en entraînant ledit arbre à cames (1) dans sa direction de rotation.

7. Dispositif de commande hydraulique pour transmissions automatiques selon l'une des revendications 1 à 6, dans lequel ledit moyen de commutation automatique de soupape hydraulique est un moyen pour n'assurer que le passage à la position du changement de vitesse en marche avant (1ère, 2ème, 3ème et 4ème) dans ladite transmission automatique (AT); et
ledit moyen de commutation manuelle de soupape hydraulique est un moyen pour assurer le passage à au moins les positions de marche avant (L, 2, D) et de marche arrière (R).

8. Dispositif de commande hydraulique pour transmissions automatiques selon l'une des revendications 1 à 7, comportant en outre :
un moyen de jugement (610 à 660) pour porter un jugement sur le fait que la commande de changement de vitesse est ou non normale; et
un moyen de positionnement à sécurité positive (54, 55) pour placer lesdites soupapes hydrauliques (2 à 8) à la position préétablie de sécurité positive lorsque ledit moyen de jugement indique que la commande du changement de vitesse se trouve dans l'état de sécurité positive.

9. Dispositif de commande hydraulique pour transmissions automatiques selon la revendication 8, dans lequel ladite position de sécurité positive est la position de la vitesse la plus rapide (4ème) de toutes les positions de changement de vitesse.

10. Dispositif de commande hydraulique pour transmissions automatiques selon la revendication 8, dans lequel ladite position de sécurité positive est une position telle qu'elle est tout près de la position de la vitesse la plus rapide (4ème) de toutes les positions de changement de vitesse et étrangle lesdits passages d'huile (46 à 51) vers les éléments respectifs d'engagement à friction dans ladite position du changement de vitesse la plus rapide.

11. Dispositif de commande hydraulique pour transmissions automatiques selon l'une des revendications 1 à 10, comprenant en outre un moyen de commutation forcée de soupape hydraulique (54, 55, 13) pour assurer de force la commutation dudit moyen de commutation de soupape et entraîner par déplacement lesdites soupapes hydrauliques (2 à 8; 88 à 100) lorsque ledit moyen de commutation automatique de soupape hydraulique est défaillant et l'entraînement dudit moyen de commutation automatique de soupape hydraulique est arrêté de sorte que lesdites soupapes hydrauliques sont placées sur ladite position de sécurité positive.

12. Dispositif de commande hydraulique selon la revendication 1, dans lequel lesdites soupapes hydrauliques comprennent :
une multitude de plaques de soupape (91 à 100) comportant des passages d'huile devant être connectés auxdits moyens respectifs d'engagement à friction, et les passages respectifs de communication pour la pression de canalisation afin de maintenir l'engagement desdits éléments d'engagement à friction, la pression d'engagement pour l'engagement desdits éléments d'engagement à friction, et la pression de vidange pour désengager lesdits éléments d'engagement à friction;
une bobine rotative cylindrique (81) comprenant une multitude de passages de communication (81a, 81b) sur la périphérie extérieure pour assurer la commutation des passages d'huile devant communiquer avec les éléments respectifs d'engagement à friction;
un manchon cylindrique (82) inséré par ajustement entre ladite plaque de soupape (91 à 100) et ladite bobine rotative (81) pour assurer la commutation des passages d'huile devant communiquer avec les éléments respectifs d'engagement à friction;
un moyen de commutation automatique de passage d'huile pour entraîner automatiquement et commander la commutation des passages d'huile de ladite bobine rotative (81), et
un moyen de commutation manuelle de passage d'huile pour assurer la commutation et la commande des passages d'huile en entraînant manuellement et commandant ledit manchon (82).

13. Dispositif de commande hydraulique pour transmissions automatiques selon la revendication 12, dans lequel ledit moyen de commutation automatique de passage d'huile est un moyen pour assurer la commutation des passages d'huile en entraînant par commande ladite bobine rotative (81) dans sa direction de rotation; et
ledit moyen de commutation manuelle de passage d'huile est un moyen pour assurer la commutation des passages d'huile en entraînant par commande ledit manchon rotatif (82) dans sa direction axiale.

14. Dispositif de commande hydraulique pour transmissions automatiques selon la revendication 12 ou 13, dans lequel ledit moyen de commutation automatique de passage d'huile est un moyen pour n'assurer que le passage à la position de changement de vitesse en marche avant (1ère, 2ème, 3ème et 4ème); et
ledit moyen de commutation manuelle de passage d'huile est un moyen pour assurer le passage à au moins la marche avant (L, 2, D) et la marche arrière (R).
